# EUROPEAN PATENT APPLICATION

(11) **EP 4 592 037 A1**
(43) Date of publication of application: **30.07.2025**
(21) Application number: 22962197.4
(22) Date of filing: 08.12.2022
(51) Int. Cl.: B25J 5/00, B25J 9/00, B25J 9/10, B25J 15/04, B25J 9/08, B62D 57/028

(54) **ROBOT**

(30) Priority: 14.10.2022 KR 20220132420
(71) Applicant: LG Electronics Inc., Yeongdeungpo-gu Seoul 07336 (KR)
(72) Inventor: CHOI, Dongkyu, Seoul 08592 (KR); KIM, Seongmin, Seoul 08592 (KR); KIM, Jinju, Seoul 08592 (KR)
(74) Representative: Vossius & Partner Patentanwälte Rechtsanwälte mbB
(86) International application number: PCT/KR2022/019862
(87) International publication number: WO 2024/080447

(57) **Abstract**

The present disclosure relates to a robot, and the robot according to the embodiment of the present disclosure may include a robot main body configured to accommodate therein a motor and a battery, a leg part configured to support the robot main body, a wheel part rotatably coupled to the leg part and configured to roll on a ground surface, an arm rotatably coupled to two opposite surfaces of the robot main body, and a coupling part disposed on the arm and configured to couple the arm to a functional module configured to move together with the robot main body, the arm being configured to be separably coupled to the functional module.

## Description

### [Technical Field]

The present disclosure relates to a robot. More specifically, the present disclosure relates to a robot capable of being separably coupled to a functional module configured to provide various functions to a user.

### [Background Art]

Recently, with the development of robot technology, the use of robots has increased not only in industrial fields but also in homes.

Household robots include robots that perform household chores such as housecleaning or controlling household electrical appliances on behalf of humans, robots that act as users' assistants or provide users with education using artificial intelligence (AI), or robots that replace pets.

However, the household robot in the related art may only perform any one of the above-mentioned functions and has a limitation in that the household robot cannot perform various functions in accordance with the user's needs or depending on the circumstances.

Meanwhile, the robots include robots configured to perform functions while being stationary at a particular position, and mobile robots that may move. In particular, in the case of the robots used at home, mobile robots, which replace the users or move around the houses while following the users, are mainly used.

Among the mobile robots, a two-wheeled robot having two wheels has an advantage of occupying a small ground surface area and being easy to store and an advantage of being easy to use in the house having a relatively small space because the robot has a small rotation radius when the robot switches between directions.

Meanwhile, Korean Patent Application Laid-Open No. 10-2017-0048815 discloses a robot including a robot arm mounted on a cleaning head.

The cleaning head and the robot arm of the robot may be coupled or separated by means of a docking part. However, the robot has only a function in which the docking part of the robot arm is docked and coupled to a groove provided in the cleaning head. In this case, in case that the cleaning head is heavy in weight, there is a limitation in that the robot arm and the cleaning head are easily separated during a process of raising the cleaning head even though the robot arm and the cleaning head are coupled.

In addition, there is a limitation in that in case that the robot falls, the docking part comes into contact with the ground surface and becomes contaminated or damaged.

Meanwhile, U.S. Patent Publication No. 2019-0258523 discloses a robot including a lifter for lifting other objects but does not disclose a structure in which the lifter is coupled to other objects.

### [Disclosure]

### [Technical Problem]

The present disclosure has been made in an effort to solve the above-mentioned problem in the related art, and an object of the present disclosure is to provide a robot having an arm separably coupled to a functional module configured to provide various functions to a user.

In addition, an object of the present disclosure is to provide a robot capable of preventing a coupling part, which is coupled to a functional module, from being contaminated or damaged while coming into contact with a ground surface.

In addition, an object of the present disclosure is to provide a robot detachably coupled to a functional module by magnetism.

In addition, an object of the present disclosure is to provide a robot capable of being caught by and coupled to a functional module by a hook structure.

In addition, an object of the present disclosure is to provide a robot capable of being stably coupled to a functional module by elasticity.

In addition, an object of the present disclosure is to provide a robot capable of being electrically connected to a functional module and transmitting or receiving a signal to or from the functional module.

### [Technical Solution]

In order to achieve the above-mentioned objects, the present disclosure provides a robot including: a robot main body configured to accommodate therein a motor and a battery; a leg part configured to support the robot main body; a wheel part rotatably coupled to the leg part and configured to roll on a ground surface; an arm rotatably coupled to two opposite surfaces of the robot main body; and a coupling part disposed on the arm and configured to couple the arm to a functional module configured to move together with the robot main body, the arm being configured to be separably coupled to the functional module.

The coupling part may include an attaching/detaching member detachably coupled to the functional module by magnetism.

The coupling part may include a catching member caught by and coupled to the functional module at a position corresponding to the functional module.

The functional module may include: a module main body disposed at a position corresponding to the robot main body; a hook rotatably coupled to the module main body and configured to be inserted into and caught by a catching groove formed in the catching member; and an elastic part configured to provide an elastic force to a rotation of the hook to maintain a state in which the hook is caught by the catching groove.

The coupling part may include an attaching/detaching member detachably coupled to the functional module by magnetism, and the attaching/detaching member may be coupled to the functional module by an attractive magnetic force, such that the hook is inserted into and caught by the catching groove by being pressed and rotated by the catching member.

The coupling part may include a connection terminal electrically connected to the functional module.

The coupling part may be disposed outside a rotation radius of the arm.

In order to achieve the above-mentioned objects, the present disclosure provides a robot including: a robot main body configured to accommodate therein a motor and a battery; a leg part configured to support the robot main body; a wheel part rotatably coupled to the leg part and configured to roll on a ground surface; an arm including a pair of rotary coupling parts rotatably coupled to two opposite surfaces of the robot main body, a connection part configured to connect the pair of rotary coupling parts, a rotary body disposed to be rotatable about the connection part as a rotation axis, and a rotation motor configured to provide a rotational force to the rotary body; and a coupling part integrally rotatably coupled to the rotary body and configured to couple the rotary body to a functional module configured to move together with the robot main body, the rotary body being configured to be separably coupled to the functional module.

The coupling part may include an attaching/detaching member detachably coupled to the functional module by magnetism.

The coupling part may include a catching member caught by and coupled to the functional module at a position corresponding to the functional module.

The functional module may include: a module main body disposed at a position corresponding to the robot main body; a hook rotatably coupled to the module main body and configured to be inserted into and caught by a catching groove formed in the catching member; and an elastic part configured to provide an elastic force to a rotation of the hook to maintain a state in which the hook is caught by the catching groove, and the hook may be separated from the catching groove during a process in which the rotary body rotates.

The coupling part may include a connection terminal electrically connected to the functional module.

### [Advantageous Effects]

As described above, according to the robot according to the present disclosure, the functional module may be separably coupled to the front or rear side of the robot main body depending on the user's instruction or the circumstances, and the functional module may perform various functions.

In addition, according to the present disclosure, the coupling part configured to be coupled to the functional module may be exposed to the outside or hidden inward while rotating, and the coupling part may come into contact with the ground surface when the robot falls down, such that it is possible to prevent the coupling part from being contaminated or damaged.

In addition, according to the present disclosure, the attaching/detaching member made of metal or electromagnet is disposed on the arm, such that the robot and the functional module may be detachably coupled by magnetism.

In addition, according to the present disclosure, the hook, which is configured to rotate by being pressed by the catching member, is rotated toward the inside of the catching groove by the elastic force, such that the robot and the functional module may be stably caught.

In addition, according to the present disclosure, the robot and the functional module may be caught by and coupled to each other, without a separate driving source, by the attractive magnetic force generated between the attaching/detaching member and the attaching/detaching part.

In addition, according to the present disclosure, the robot and the functional module are electrically connected by the connection terminal, such that electric power may be supplied to the robot or the functional module, and the robot and the functional module transmit or receive signals to or from each other, such that the communication may be implemented.

### [Description of Drawings]

FIG. 1 is a perspective view for explaining a robot according to an embodiment of the present disclosure.
FIG. 2 is a front view of the robot according to the embodiment of the present disclosure.
FIG. 3 is a perspective view of the robot according to the embodiment of the present disclosure when viewed at another angle.
FIG. 4 is a partially cut-away view for explaining transmission of power for rotating an arm of the robot according to the embodiment of the present disclosure.
FIG. 5 is a top plan view of the robot according to the embodiment of the present disclosure.
FIG. 6 is a bottom plan view of the robot according to the embodiment of the present disclosure.
FIGS. 7A and 7B are views for explaining a structure in which a rotation of the arm is restricted.
FIGS. 8A and 8B are views for explaining another embodiment of FIGS. 7A and 7B.
FIG. 9 is a view for explaining a state in which the robot according to the embodiment of the present disclosure is on standby without moving.
FIG. 10 is a side view of FIG. 9.
FIGS. 11A and 11B are views for explaining an operation of the robot according to the embodiment of the present disclosure that stands up after falling forward.
FIGS. 12A and 12B are views for explaining an operation of the robot according to the embodiment of the present disclosure that stands up after falling rearward.
FIG. 13 is a view for explaining a coupling relationship between a robot mask and a robot main body of the robot according to the embodiment of the present disclosure.
FIGS. 14 and 15 are views for explaining a state in which the robot according to the embodiment of the present disclosure is coupled to a functional module.
FIG. 16 is a perspective view for explaining a coupling part of the robot according to the embodiment of the present disclosure.
FIGS. 17A to 17C are views for explaining a process in which a rotary body of the robot according to the embodiment of the present disclosure rotates.
FIGS. 18A to 18C are views for explaining a process in which the coupling part of the robot according to the embodiment of the present disclosure is coupled to the functional module.
FIGS. 19 and 20 are perspective views of the functional module coupled to the robot according to the embodiment of the present disclosure.
FIG. 21 is an enlarged view for explaining a detailed configuration of the functional module coupled to the robot according to the embodiment of the present disclosure.
FIG. 22 is a block diagram for explaining a control configuration of the robot according to the embodiment of the present disclosure.

### [Mode for Invention]

Hereinafter, exemplary embodiments of the present disclosure will be described in detail with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the spirit and technical scope of the present disclosure.

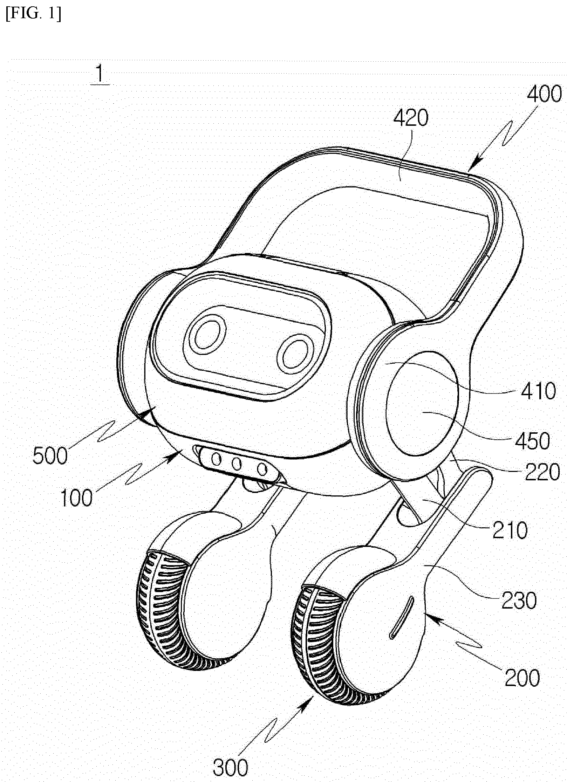

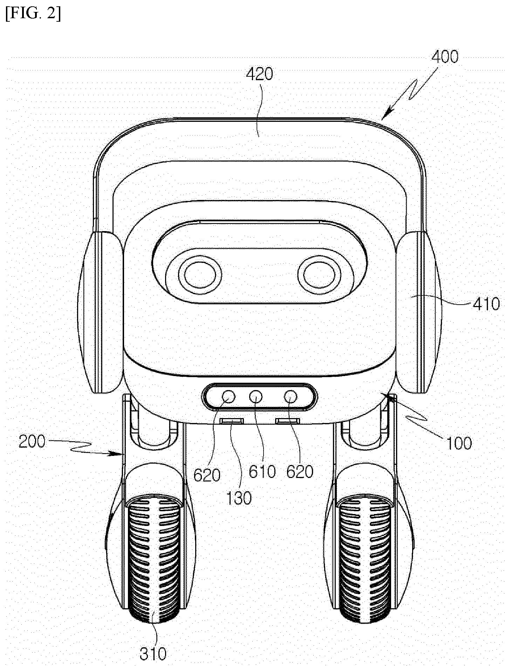

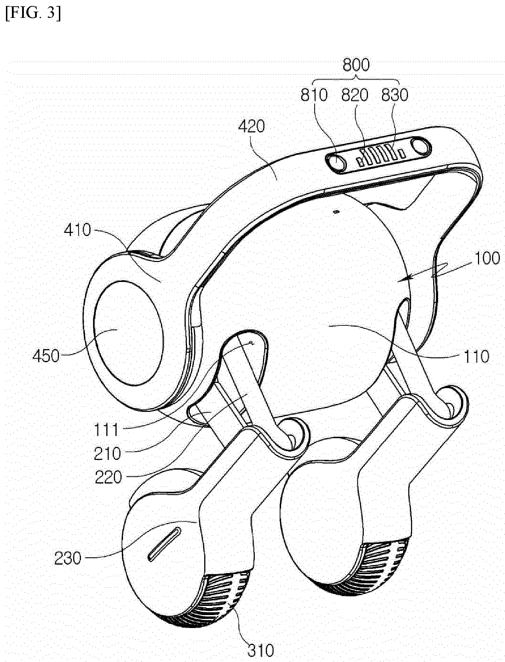

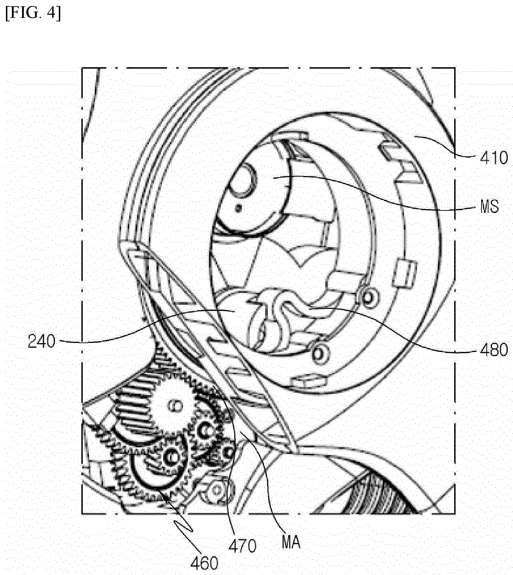

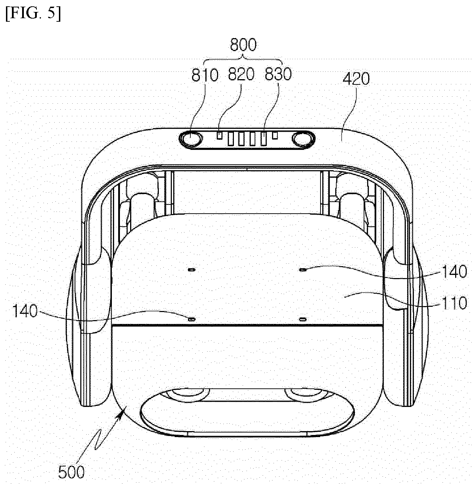

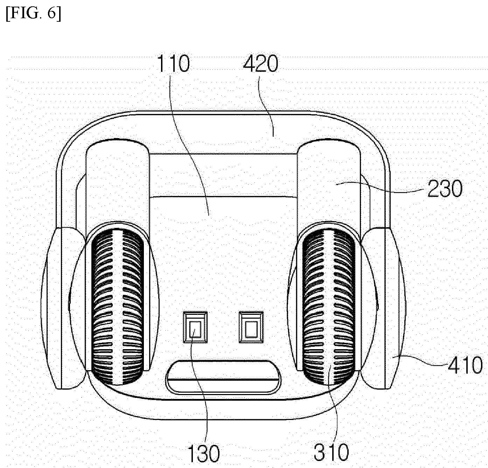

FIG. 1 is a perspective view for explaining a robot according to an embodiment of the present disclosure, FIG. 2 is a front view of the robot according to the embodiment of the present disclosure, FIG. 3 is a perspective view of the robot according to the embodiment of the present disclosure when viewed at another angle, FIG. 4 is a partially cut-away view for explaining transmission of power for rotating an arm of the robot according to the embodiment of the present disclosure, FIG. 5 is a top plan view of the robot according to the embodiment of the present disclosure, and FIG. 6 is a bottom plan view of the robot according to the embodiment of the present disclosure.

A robot 1 according to an embodiment of the present disclosure will be described below with reference to FIGS. 1 to 6.

The robot 1 according to the embodiment of the present disclosure is placed on a floor and configured to move along a floor surface. Therefore, hereinafter, a vertical direction is defined based on a state in which the robot 1 is placed on the floor.

Further, a side at which a mapping camera 610 to be described below is disposed is defined and described as a front side of the robot 1. In addition, a side opposite to the front side is defined and described as a rear side of the robot 1.

Among the portions described in the embodiment of the present disclosure, a "lowermost portion' may be a portion positioned at a lowest position or a portion closest to the floor when the robot 1 according to the embodiment of the present disclosure is placed on the floor and used.

The robot 1 according to the embodiment of the present disclosure includes a robot main body 100, leg parts 200, wheel parts 300, an arm 400, and a robot mask 500. In this case, the leg parts 200 are coupled to the robot main body 100, and the wheel parts 300 are coupled to the leg parts 200. In addition, the arm 400 is pivotably coupled to two opposite surfaces of the robot main body 100. Further, the robot mask 500 is detachably coupled to the robot main body 100.

### Robot Main Body

The robot main body 100 of the robot 1 according to the embodiment of the present disclosure will be described below with reference to FIGS. 1 to 6.

The components, which constitute the robot 1, may be coupled to the robot main body 100. For example, the robot mask 500 may be detachably coupled to the robot main body 100. In addition, the arm 400 is pivotably coupled to the robot main body 100. The arm 400 is pivotably coupled to two opposite ends of the robot main body 100. The robot main body 100 may be coupled to a functional module 900 by means of the arm 400 and perform an additional function. In addition, with the arm 400, the robot main body 100 may implement a posture in which the robot main body 100 is on standby for power saving or a posture in which the robot main body 100 stands up after falling.

Some of the components, which constitute the robot 1, may be accommodated in the robot main body 100.

A main body housing 110 may define an external shape of the robot main body 100. One or more motors including a suspension motor MS, one or more sensors, and a battery B may be accommodated in an internal space of the main body housing 110.

In addition, although not illustrated, at least one bumper may be provided in the main body housing 110.

The bumper may be provided to be movable relative to the main body housing 110. For example, the bumper may be coupled to the main body housing 110 and configured to be reciprocable in a forward/rearward direction of the main body housing 110.

The bumper may be coupled along a part or the entirety of a front rim of the main body housing 110. In addition, the bumper may be disposed at a rear side in the main body housing 110.

With this configuration, in case that the robot 1 collides with another object or a person, the bumper may absorb an impact applied to the robot main body 100 and protect the robot main body 100 and the components accommodated in the robot main body 100.

The pair of leg parts 200 are coupled in the main body housing 110. The pair of leg parts 200 may penetrate the main body housing 110 and be exposed to the outside.

Specifically, a first link 210 and a second link 220 may be rotatably coupled in the main body housing 110. For example, a link frame (not illustrated), to which the first link 210 and the second link 220 are linked, may be provided in the main body housing 110.

Further, the suspension motor MS may be accommodated in the main body housing 110. For example, the suspension motor MS may be disposed on the link frame (not illustrated). The suspension motor MS may be connected to the first link 210.

A pair of leg guide holes 111 may be formed in the main body housing 110. For example, the pair of leg guide holes 111 may be formed side by side in the forward/rearward direction of the main body housing 110.

With this configuration, the leg part 200 may rotate along the leg guide hole 111 and guide a rotational movement range of the leg part 200.

The main body housing 110 has a shape in which a width (or diameter) in a horizontal direction is larger than a height in a vertical direction. For example, the main body housing 110 may have a shape similar to an ellipsoid.

The robot main body 100 may provide an advantageous structure that assists the robot 1 in having a stable structure and allows the robot 1 to move (travel) in a balanced manner.

The robot main body 100 may be disposed vertically above wheels 310 to be described below. A load of the robot main body 100 may be transmitted to the wheels 310 through the leg parts 200, and the wheels 310 may support the leg parts 200 and the robot main body 100. With this configuration, the wheels 310 may stably support a load of the robot main body 100.

The robot main body 100 may include a display 120. The display 120 may be coupled to the main body housing 110. The display 120 may be formed in a flat plate shape. The display 120 may be disposed at a predetermined angle with respect to the ground surface. For example, the display 120 may be disposed at a position directed forward and upward. With this configuration, when the robot 1 approaches a user, the display 120 may be visible to the user when the user looks at the robot 1.

Meanwhile, the display 120 may visually provide the user with information on an operating state of the robot 1.

The display 120 may include any one of a light-emitting diode (LED), a liquid crystal display (LCD), a plasma display panel, and an organic light-emitting diode (OLED).

The display 120 may display information such as information on an operating time of the robot 1 and information on electric power of the battery B.

According to the embodiment, the display 120 may be an input part 125. That is, a control instruction may be inputted to the display 120 from the user. For example, the display 120 may be a touch screen configured to visually display an operating state and receive a control instruction from the user.

The display 120 may display a facial expression of the robot 1. Alternatively, the display 120 may display pupils of the robot 1. A current state of the robot 1 may be expressed as an anthropomorphic emotion through a facial shape or a pupil shape displayed on the display 120. For example, when the user goes out and returns, a smiling face or smiling eyes may be displayed on the display 120. Therefore, the user has an effect of feeling in communion with the robot 1.

A charging terminal 130 may be disposed on the main body housing 110. For example, the charging terminal 130 may be disposed toward the ground surface. For example, the charging terminal 130 may be disposed to face the ground surface. In another example, the charging terminal 130 may be disposed at a predetermined angle with respect to the ground surface. With this configuration, in case that the robot 1 is coupled to a robot charging stand (not illustrated), the charging terminal 130 may come into contact with a terminal provided on the robot charging stand (not illustrated).

The charging terminal 130 may be electrically connected to the robot charging stand (not illustrated). With this configuration, the robot 1 may receive electric power through the charging terminal 130. The electric power supplied to the charging terminal 130 may be supplied to the battery B. In addition, the robot 1 may receive an electrical signal through the charging terminal 130. A controller 700 may receive the electrical signal transmitted through the charging terminal 130.

Meanwhile, the mapping camera 610 may be disposed a front lower side of the main body housing 110. For example, the mapping camera 610 may be disposed on a centerline passing through a center of the main body housing 110 based on a leftward/rightward direction. With this configuration, the mapping camera 610 may detect an object or person disposed forward of the robot 1.

In addition, IR sensors 620 may be disposed at a front lower side of the main body housing 110. For example, the pair of IR sensors 620 may be disposed at a predetermined interval in the leftward/rightward direction. With this configuration, the IR sensors 620 may detect a position of a light source configured to emit infrared rays.

The IR sensor 620 may be disposed to be close to the mapping camera 610. For example, the mapping camera 610 may be disposed between the pair of IR sensors 620.

With the above-mentioned disposition, the IR sensors 620 may detect light emitted from a lamp of the functional module 900 or the robot charging stand (not illustrated). When the robot main body 100 approaches the lamp, the mapping camera 610 may detect a shape of the functional module 900 or the robot charging stand (not illustrated).

### Leg Part

The leg part 200 of the robot 1 according to the embodiment of the present disclosure will be described below with reference to FIGS. 1 to 6.

The leg part 200 may be coupled to the robot main body 100 and support the robot main body 100. For example, the pair of leg parts 200 are coupled in the main body housing 110. The pair of leg parts 200 may be disposed to be symmetric (linearly symmetric). In this case, at least a part of the leg part 200 may be disposed to be closer to the ground surface than the robot main body 100. Therefore, the robot main body 100 may travel in a shape in which the robot main body 100 stands on the ground surface with the pair of leg parts 200. That is, the gravity applied to the robot main body 100 may be supported by the leg parts 200, and a height of the robot main body 100 may be maintained.

The leg part 200 includes the first link 210, the second link 220, and a third link 230. In this case, the first link 210 and the second link 220 are rotatably coupled to the robot main body 100 and the third link 230. That is, the first link 210 and the second link 220 are linked to the robot main body 100 and the third link 230.

The first link 210 is linked to left and right sides in the robot main body 100.

The first link 210 is connected to the suspension motor MS. For example, the first link 210 may be connected directly to a shaft of the suspension motor MS or connected to the shaft of the suspension motor MS through gears. With this configuration, the first link 210 receives driving power from the suspension motor MS.

The first link 210 is formed in a frame shape. The suspension motor MS is connected to one longitudinal side of the first link 210, and the third link 230 is coupled to the other longitudinal side of the first link 210. In this case, one side of the first link 210 connected to the suspension motor MS may be disposed to be farther from the ground surface than the other side coupled to the third link 230.

One side of the first link 210 is coupled to a leg support part (not illustrated) provided in the main body housing 110. The first link 210 may be rotatably coupled to the leg support part. For example, one side of the first link 210 may be formed in a disc shape or a circular plate shape. Therefore, one side of the first link 210 may penetrate the leg support part and be connected to the suspension motor MS.

One side of the first link 210 is connected to the suspension motor MS. For example, one side of the first link 210 may be fixedly coupled to the shaft of the suspension motor MS. With this configuration, when the suspension motor MS operates, one side of the first link 210 may rotate in conjunction with the rotation of the shaft of the suspension motor MS.

The other side of the first link 210 is rotatably coupled to the third link 230. For example, a through-hole may be formed at the other side of the first link 210. The shaft may be rotatably and penetratively coupled to the through-hole. The third links 230 may be coupled to two opposite longitudinal ends of the shaft.

With this configuration, the shaft may define an axis about which the first link 210 and/or the third link 230 rotate. Therefore, the first link 210 and the third link 230 may be connected to be relatively rotatable.

Although not illustrated, the leg part 200 may further include a gravity compensation part. The gravity compensation part compensates for a situation in which the robot main body 100 is moved vertically downward by gravity. That is, the gravity compensation part provides a force for supporting the robot main body 100.

For example, the gravity compensation part may be a torsion spring. The gravity compensation part may be wound to surround an outer side of an outer peripheral surface of the first link 210. Further, one end of the gravity compensation part may be inserted into and fixedly coupled to the first link 210, and the other end of the gravity compensation part may be inserted into and fixedly coupled to the third link 230.

The gravity compensation part applies a force (rotational force) in a direction in which an angle between the first link 210 and the third link 230 increases. For example, two opposite ends of the gravity compensation part are retracted in advance so that the gravity compensation part applies a restoring force in the direction in which an included angle between the first link 210 and the third link 230 increases. Therefore, even though the gravity is applied to the robot main body 100 in the state in which the robot 1 is placed on the ground surface, the included angle between the first link 210 and the third link 230 may be maintained within a predetermined angle range.

With this configuration, it is possible to prevent the robot main body 100 from moving downward toward the ground surface even though the suspension motor MS does not operate. Therefore, the gravity compensation part may provide an effect of preventing a loss of energy caused by the operation of the suspension motor MS and maintaining a height of the robot main body 100 as a predetermined distance or more from the ground surface.

The second link 220 is linked to the left and right sides in the robot main body 100. For example, the second link 220 may be linked to the leg support part (not illustrated) provided in the main body housing 110. That is, the second link 220, together with the first link 210, may be coupled to the leg support part (not illustrated) to which the first link 210 is coupled.

The second link 220 is formed in a frame shape. One longitudinal side of the second link 220 is coupled to the leg support part (not illustrated), and the third link 230 is coupled to the other longitudinal side of the second link 220.

An electric wire may be accommodated in the second link 220. For example, a space in which the electric wire may be accommodated may be formed in the second link 220. Therefore, electric power of the battery B may be supplied to the wheel part 300 through the electric wire. Further, it is possible to prevent the electric wire from being exposed to the outside.

One side of the second link 220 is rotatably coupled to the leg support part. For example, although not illustrated, the shaft coupled to the leg support part may be penetratively coupled to one side of the second link 220. A hollow portion may be formed in the shaft. The electric wire may pass through the hollow portion. With this configuration, it is possible to prevent the electric wire, through which electric power is supplied from the battery B to wheel motors MW, from being exposed to the outside.

The other side of the second link 220 is rotatably coupled to the third link 230. Specifically, the other end of the second link 220 is rotatably coupled to the third link 230 through the shaft. For example, the other side of the second link 220 may be formed in a disc shape, and the shaft may be penetratively coupled to the other side of the second link 220. Further, the two opposite longitudinal ends of the shaft may be coupled to the third links 230. With this configuration, the shaft may define an axis about which the second link 220 and/or the third link 230 rotates. Therefore, the second link 220 and the third link 230 may be connected to be relatively rotatable.

The third link 230 is linked to the first link 210 and the second link 220 and coupled to the wheel part 300.

The third link 230 is formed in a frame shape. The first link 210 and the second link 220 are coupled to one longitudinal side of the third link 230, and the wheel part 300 is coupled to the other longitudinal side of the third link 230.

One longitudinal side of the third link 230 is linked to the first link 210 and the second link 220. For example, a space may be formed at one side of the third link 230 so that the first link 210 and the second link 220 may be accommodated in the space. That is, one side of the third link 230 may be provided in the form of a pair of frames parallel to each other, and the first link 210 and the second link 220 may be accommodated in the space between the pair of frames.

In this case, two shafts may be disposed side by side between the pair of frames. That is, two opposite ends of each of the two shafts may be coupled to the pair of frames. Further, the shafts may each penetrate the first link 210 and the second link 220. In this case, the first link 210 may be disposed forward and downward of the second link 220. That is, the shaft, which penetrates the first link 210, may be disposed to be closer to the wheel 310 than the shaft that penetrates the second link 220.

Therefore, the first link 210 and the second link 220 may be coupled to be rotatable relative to the third link 230.

The other longitudinal side of the third link 230 is coupled to the wheel part 300. The other longitudinal side of the third link 230 may be formed to cover at least a part of the wheel 310. For example, the other longitudinal side of the third link 230 may be formed to cover a rotation center of the wheel 310, and a space, in which the wheel 310 may be rotatably accommodated, may be formed at the other longitudinal side of the third link 230.

In addition, the wheel motor MW may be accommodated in the third link 230 at the other longitudinal side of the third link 230.

With this configuration, the wheel 310 and the wheel motor MW may be accommodated at the other longitudinal side of the third link 230, and the wheel 310 may be rotatably coupled to the other longitudinal side of the third link 230.

Meanwhile, a sensor capable of measuring a distance from the ground surface may be provided at the other longitudinal side of the third link 230. For example, the sensor may be a ToF sensor (time-of-flight sensor). With this configuration, the controller 700 may determine whether the wheel 310 is in contact with the ground surface.

Meanwhile, the leg part 200 may have a stopper 240. The stopper 240 may be disposed in the main body housing 110. The stopper 240 may be disposed adjacent to a rotary coupling part 410 of the arm 400. For example, the stopper 240 may be disposed in an inner peripheral surface of the rotary coupling part 410 formed in a cylindrical shape.

For example, the stopper 240 may be disposed on the leg support part (not illustrated). In another example, the stopper 240 may be disposed on the first link 210.

The stopper 240 may be formed in a shape protruding toward the rotary coupling part 410. For example, the stopper 240 may have a predetermined thickness and protrude in an arcuate (arch) shape disposed on a concentric circle. In this case, an outer peripheral surface of the stopper 240 may be disposed toward a front upper side of the robot 1, and an inner peripheral surface of the stopper 240 may be disposed toward a rear lower side of the stopper.

The stopper 240 may be in contact with and supported by a rotation protrusion 480 of the arm 400 to be described below. For example, the rotation protrusion 480, which protrudes from an inner peripheral surface of the rotary coupling part 410, may rotate in conjunction with the rotation of the arm 400. The arm 400 may come into contact with the rotation protrusion 480 in case that the arm 400 rotates to a predetermined position.

With this configuration, in case that the arm 400 rotates, the stopper 240 may restrict a rotation angle of the arm 400.

The entire balance implemented by the leg part 200 will be described. The first link 210 and the second link 220 are rotatably coupled to the link frame (not illustrated) provided in the robot main body 100, and the first link 210 and the second link 220 are linked to the third link 230. That is, the robot 1 has the structure in which the robot main body 100 is supported by a four-joint link including the link frame (not illustrated), the first link 210, the second link 220, and the third link 230.

Further, the leg part 200 generates a restoring force in a direction in which the gravity compensation part raises the robot main body 100. Therefore, even in a state in which the suspension motor MS does not operate, a state in which the pair of leg parts 200 raise the robot main body 100 by a predetermined height from the ground surface may be maintained.

Meanwhile, the robot 1 according to the embodiment of the present disclosure may maintain the balance by operating the suspension motor MS when the robot 1 raises any one of the pair of wheels 310 to climb over an obstacle or decreases the height of the robot main body 100 to charge the robot 1.

When the suspension motor MS operates, the first link 210 rotates about a motor coupling part 212, and a link coupling part 213 moves upward. Further, the third link 230 moves in conjunction with the rotation of the first link 210. Further, the second link 220 rotates by being pushed by the third link 230. As a result, one end of the third link 230 may move rearward, and the other end of the third link 230 may move upward.

With this configuration, a forward/rearward movement range of the wheel 310 may be restricted even though the wheel 310 moves in the vertical direction. Therefore, the robot 1 may stably maintain the balance.

Therefore, according to the present disclosure, the robot 1 may climbs over obstacles with various heights by using the four-joint link structure.

### WHEEL PART

The wheel part 300 of the robot 1 according to the embodiment of the present disclosure will be described with reference to FIGS. 1 to 6.

The wheel part 300 may be rotatably coupled to the leg part 200 and configured to roll on the ground surface to move the robot main body 100 and the leg part 200.

The wheel part 300 includes the wheel 310 configured to come into contact with the ground surface and roll on the ground surface.

The wheel 310 is provided to have a predetermined radius and provided to have a predetermined width in an axial direction. When the robot 1 is viewed from the front side, at least a part of the robot main body 100 and the leg part 200 may be disposed vertically above the wheel 310.

Although not illustrated, the wheel 310 may include a wheel frame formed in a circular shape. The wheel frame may be formed in a cylindrical shape having one side that is directed toward the shaft of the wheel motor MW and opened. Therefore, a weight of the wheel frame 311 may be reduced.

However, when the wheel frame is formed in a cylindrical shape, the overall rigidity of the wheel frame may deteriorate. In consideration of the situation, ribs (not illustrated) for enhancing the rigidity may be formed on inner and outer surfaces of the wheel frame.

A tire is coupled to an outer peripheral surface of the wheel frame. The tire may be formed in an annular shape having a diameter so that the tire may be fitted with the outer peripheral surface of the wheel frame.

Grooves having predetermined patterns may be recessed in an outer peripheral surface of the tire to improve a ground contact force of the tire.

In the embodiment, the tire may be made of a rubber material having elasticity.

The wheel motor MW may provide driving power to the wheel 310. The wheel motor MW may generate a rotational force by receiving electric power from the battery B.

The wheel motor MW may be accommodated in the third link 230 at the other side of the third link 230. Further, the shaft of the wheel motor MW may be coupled to the wheel 310. That is, the wheel motor MW may be an in-wheel motor.

With this configuration, when the wheel motors MW operate, the wheels 310 may roll along the ground surface while rotating, and the robot 1 may move along the ground surface.

### Arm

The arm 400 of the robot 1 according to the embodiment of the present disclosure will be described with reference to FIGS. 1 to 6.

The arm 400 may be pivotably coupled to two opposite surfaces of the robot main body 100. For example, the arm 400 may refer to a rotary body coupled to two opposite ends based on an axial direction (longitudinal direction) of the robot main body 100 with an ellipsoid shape and configured to rotate about a rotation axis defined by the two opposite ends of the robot main body 100 based on the axial direction.

Specifically, the arm 400 includes the rotary coupling parts 410, a connection part 420, a rotary body 430, and a rotation motor 440.

The rotary coupling parts 410 are rotatably coupled to the two opposite surfaces of the robot main body 100. The pair of rotary coupling parts 410 may be coupled to the two opposite sides of the robot main body 100 based on a leftward/rightward direction and configured to be relatively rotatable. In this case, the pair of rotary coupling parts 410 may rotate in conjunction with each other. That is, the pair of rotary coupling parts 410 may rotate simultaneously and have the same magnitude of the rotation angle. However, when viewed based on the robot main body 100, the rotation directions of the pair of rotary coupling parts 410 may be opposite to each other. That is, the rotary coupling part 410 at the other side may rotate counterclockwise when the rotary coupling part 410 at one side rotates clockwise when viewed based on the robot main body 100.

The rotary coupling part 410 may be shaped to cover the two opposite ends of the robot main body 100 based on the leftward/rightward direction. For example, the rotary coupling part 410 may be formed in a cylindrical shape having a predetermined thickness. In this case, the two opposite ends of the robot main body 100 based on the leftward/rightward direction may be disposed to face rotation centers of the rotary coupling parts 410.

That is, a state in which the rotary coupling part 410 is coupled to the robot main body 100 will be described. Assuming that the robot main body 100 is a human face, the rotary coupling parts 410 may be similar in shapes to a pair of earplugs or earpieces of a headset.

As illustrated in FIG. 4, an arm motor MA of the robot 1 according to the embodiment may be disposed in the main body housing 110. On the contrary, according to the embodiment, the arm motor MA may be disposed in the rotary coupling part.

The arm motor MA may be connected to the arm 400 and provide driving power to the arm 400. More specifically, a final output end of the shaft or gear of the arm motor MA is connected to the rotary coupling part 410. For example, as illustrated in FIG. 4, the shaft of the arm motor MA may be connected to a speed reducer 460, and the speed reducer 460 may be connected to a driven gear 470.

The speed reducer 460 may include at least one gear, transmit the rotational force, which is applied from the arm motor MA, to the driven gear 470, and reduce a rotational speed of the driven gear 470 by means of a gear ratio. Therefore, the precise rotation of the arm 400 may be controlled, and the arm 400 may provide a relatively high force.

The driven gear 470 may be coupled to the rotary coupling part 410 and rotate integrally. The driven gear 470 may engage with an output end of the speed reducer 460 and receive rotational power of the arm motor MA.

With this configuration, when the arm motor MA operates, the rotary coupling part 410 may rotate.

The arm motor MA may be provided as two arm motors MA respectively connected to the pair of rotary coupling parts 410. In another example, the arm motor MA may be provided as a single arm motor MA connected to any one of the rotary coupling parts 410.

With this configuration, when the arm motor MA operates, the pair of rotary coupling parts 410 rotate together in conjunction with each other, and the connection part 420 is also rotated in accordance with the rotations of the rotary coupling parts 410. That is, according to the present disclosure, the rotary coupling parts 410 and the connection part 420 of the arm 400 may integrally rotate about arm shafts of the rotary coupling parts 410 that define the rotation axis.

Meanwhile, speakers 450 may be disposed at outer sides of the rotary coupling parts 410. That is, the speakers 450 may be disposed on the pair of rotary coupling parts 410 in a direction opposite to a direction in which the robot main body 100 is disposed. Therefore, the speakers 450 may be respectively disposed at positions at which the two opposite sides of the main body housing 110 based on the leftward/rightward direction are covered.

The speaker 450 may transmit information on the robot 1 as a sound. A source of the sound transmitted by the speaker 450 may be sound data pre-stored in the robot 1. For example, the pre-stored sound data may be voice data of the robot 1. For example, the pre-stored sound data may be a notification sound that informs a state of the robot 1. Meanwhile, a source of the sound transmitted by the speaker 450 may be sound data received through a communication part 710.

Meanwhile, similar to human arms, a robot in the related art may have a pair of arms at two opposite sides of a main body and carry objects or perform particular tasks.

In contrast, in case that the pair of arms are provided as described above, the arms may move separately, and thus loads applied to the two opposite sides of the robot may vary. For this reason, there may occur a problem in that the robot tilts toward one side and falls over.

In addition, in a state in which the robot falls down, the arms may try to stand up **while touching** the ground surface. However, because the arms at the two opposite sides rotate separately and touch the ground surface, there is a limitation in that the robot may fall down again while losing balance during the process in which the robot stands up.

Meanwhile, in the case of a robot configured to carry objects or perform particular tasks by using one arm, there is a limitation in that a load of the object, which is carried by the robot, or an impact, which may occur while the tasks are performed, is concentrated only on one arm, which may damage the arm.

In order to cope with the limitations, the robot 1 according to the embodiment of the present disclosure is configured in a shape in which the single arm 400 is rotatably coupled to the two opposite sides of the robot main body 100.

The connection part 420 may connect the pair of rotary coupling parts 410. The connection part 420 may connect the pair of rotary coupling parts 410 configured to cover the two opposite sides of the robot main body 100 based on the leftward/rightward direction so that the pair of rotary coupling parts 410 rotate together.

The connection part 420 may be shaped to connect the pair of rotary coupling parts 410 and rotate about the robot main body 100. Specifically, the connection part 420 may be formed in a frame shape having two opposite longitudinal ends that are bent and extend. In this case, the two opposite ends of the connection part 420, which are bent and extend, may be disposed side by side and connected to the pair of rotary coupling parts 410. For example, the connection part 420 may be formed in a '∩' shape. In another example, the connection part 420 may be formed in an arcuate shape.

The state in which the arm 400 is coupled to the robot main body 100 will be described. Assuming that the robot main body 100 is a human face, the connection part 420 may have a shape similar to a hair band of a headphone. That is, assuming that the robot main body 100 is a human face, the arm 400 may be similar in shape to a headset.

With this configuration, the pair of rotary coupling parts 410 may be integrally connected to the connection part 420, and the entire arm 400 may rotate about the rotary coupling part 410 as a rotation center.

Meanwhile, a rotation radius of the arm 400 may be longer than a maximum length of the first link 210 and shorter than a maximum length of the leg part 200. Specifically, a shortest distance from the rotation center of the rotary coupling part 410 to an outer end of the connection part 420 may be longer than the maximum length of the first link 210 and shorter than the maximum length of the leg part 200.

With this configuration, when the arm 400 rotates, at least a part of the arm 400 may be disposed to be closer to the ground surface than the first link 210 to the ground surface.

Meanwhile, the arm 400 further includes the rotation protrusion 480 protruding from the inner peripheral surface of the rotary coupling part 410.

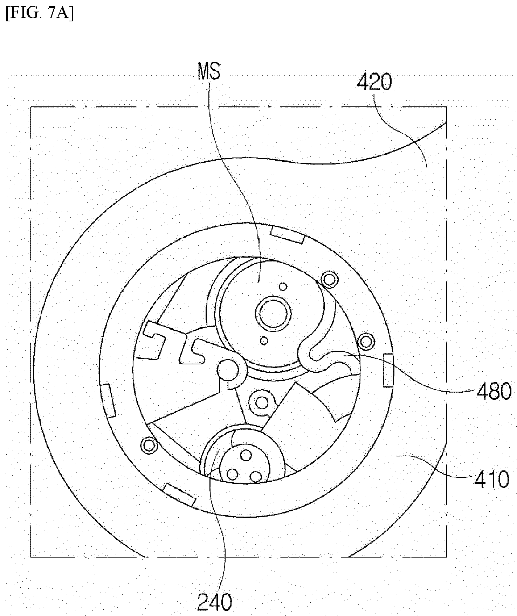

The rotation protrusion 480 may protrude from the inner peripheral surface of the rotary coupling part 410 and be formed in a shape having a circumferential width that decreases in a direction from the inner peripheral surface of the rotary coupling part 410 toward the rotation center of the rotary coupling part 410 (see FIG. 7A).

The rotation protrusion 480 may rotate together with the rotary coupling part 410 and the connection part 420. That is, in case that the rotary coupling part 410 and the connection part 420 are rotated, the rotation protrusion 480 rotates at the same rotation angle as the rotary coupling part 410 and the connection part 420.

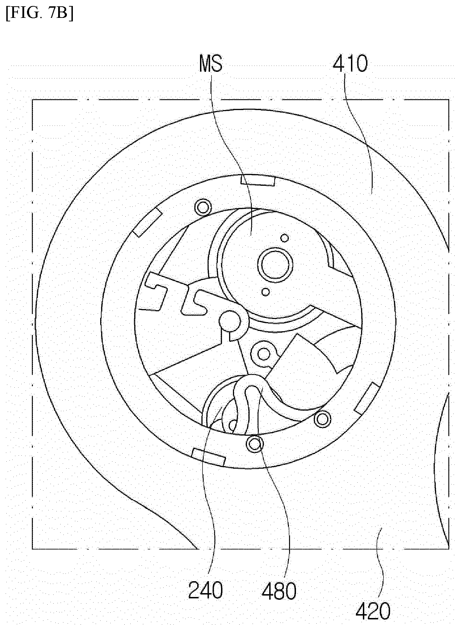

The rotation protrusion 480 may be brought into contact with and supported by the stopper 240 as the arm 400 rotates. For example, in case that the connection part 420 passes over a rear side of the robot main body 100 and rotates to be closer to the ground surface than the first link 210 to the ground surface, the rotation protrusion 480 may come into contact with the stopper 240 (see FIG. 7B).

With this configuration, in case that the arm 400 rotates to a predetermined position, the stopper 240 and the rotation protrusion 480 may be brought into contact with and supported by each other, thereby restricting a rotation of the arm 400.

In addition, it is possible to maintain postures of the arm 400 and the leg part 200 while maintaining the state in which the stopper 240 and the rotation protrusion 480 support each other.

In case that the user's special instruction or a preset situation does not occur, an outer end of the arm 400 may be disposed to be farthest from the ground surface than the robot main body 100 from the ground surface. With this configuration, the user may hold the arm 400 and easily carry the robot 1. That is, the arm 400 may serve as a handle that may be grasped by the user.

Further, in case that the user's special instruction or a preset situation does not occur, the arm 400 may be disposed rearward of the robot mask 500. This is to prevent the robot mask 500 from being covered by the arm 400 when the user looks at the robot 1.

Meanwhile, when the user's special instruction or a preset situation occurs, the arm 400 may implement various functions while rotating. Hereinafter, various functions implemented by the rotation of the arm 400 will be described.

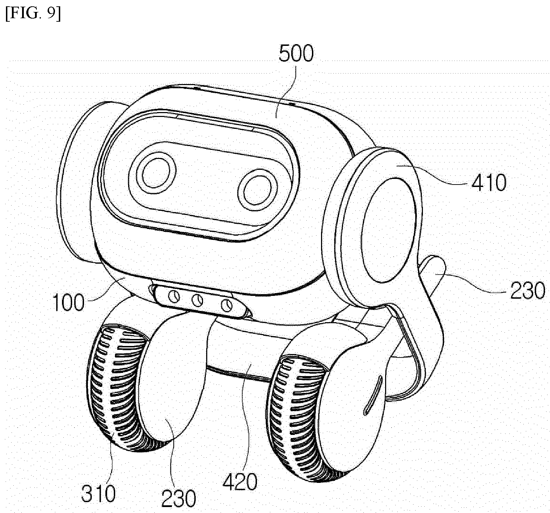

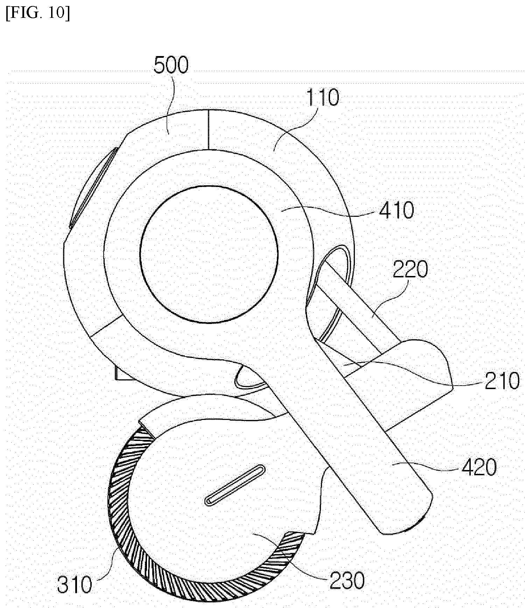

Meanwhile, FIGS. 7A to 10 are views for explaining states in which the robot according to the embodiment of the present disclosure is on standby without moving.

As illustrated in FIGS. 7A to 10, the robot 1 of the present disclosure may rotate the arm 400 toward the ground surface. For example, the arm 400 may pass over the rear side of the robot main body 100 from above the robot main body 100 and rotate to a rear lower side of the robot main body 100. That is, the arm 400 may be rotated rearward by the operation of the arm motor MA.

The arm 400 rotates to be closer to the ground surface than a lower end of the first link 210 and a lower end of the second link 220 to the ground surface. Further, at least a part of the arm 400 may be disposed to be closer to the ground surface than an upper end of the third link 230 to the ground surface.

Together with or before the rotation of the arm 400, the leg parts 200 may move to decrease a posture of the robot 1. That is, an included angle between the first link 210 and the third link 230 and an included angle between the second link 220 and the third link 230 may decrease.

Therefore, entirely, the robot main body 100 may move downward toward the ground surface, the outer end of the arm 400 may be disposed to be closer to the ground surface than the joint part in which the first link 210, the second link 220, and the third link 230 are coupled to one another. This may look similar to the robot 1 sitting down (scooching down).

In this case, the rotation protrusion 480 of the arm 400 may be brought into contact with and supported by the stopper 240, and an additional rotation of the arm 400 may be restricted.

An overall center of gravity of the robot 1 may be decreased by the above-mentioned operation. In addition, the overall center of gravity of the robot 1 may be moved rearward by the rearward rotation of the arm 400.

Therefore, even though the wheels 310 do not rotate as the operations of the wheel motors MW are stopped, the robot 1 may be inclined rearward, and the pair of wheels 310 and the lower end of the arm 400 may come into contact with the ground surface.

In this case, the rotation protrusions 480 and the stoppers 240 come into contact with and support one another at the same time when the load of the robot main body 100 pushes the leg parts 200, thereby preventing the leg parts 200 from being unfolded. That is, in case that the pair of wheels 310 and the lower end of the arm 400 come into contact with the ground surface, the posture of the robot 1 may be maintained without a separate operation of the motor.

As a result, with the above-mentioned operation of the robot 1, the single arm 400 and the pair of wheels 310 may come into contact with the ground surface and support the robot main body 100 at three points.

Therefore, according to the present disclosure, in case that the robot 1 does not need to move or is on standby in place, the robot 1 may maintain the posture while touching the ground surface with the arm 400 and the wheels 310 without operating the wheel motors MW, such that the electric power consumption of the robot 1 may be minimized.

This may remarkably reduce the electric power consumption in comparison with a case in the related art in which a pair of wheels need to be continuously rotated so that a two-wheeled robot is stopped to be on standby in place.

Alternatively, there is a limitation in that a large amount of energy needs to be instantaneously applied to the wheel and/or the arm to implement an operation of raising the robot again even though the robot is laid down or seated on the ground surface to reduce electric power waste.

In comparison with the related art, according to the present disclosure, the robot 1 is maintained while touching the ground surface with the arm 400. Therefore, the robot 1 may be raised again by a simple operation of the arm 400 pushing the ground surface, which may minimize electric power waste.

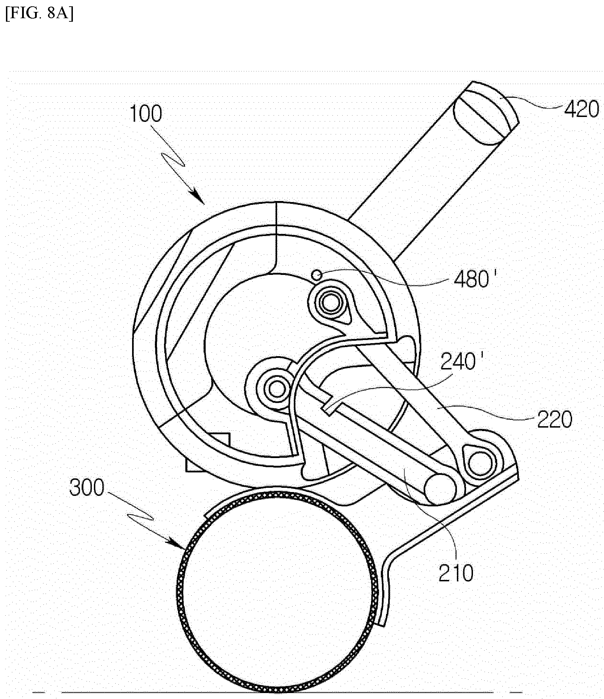

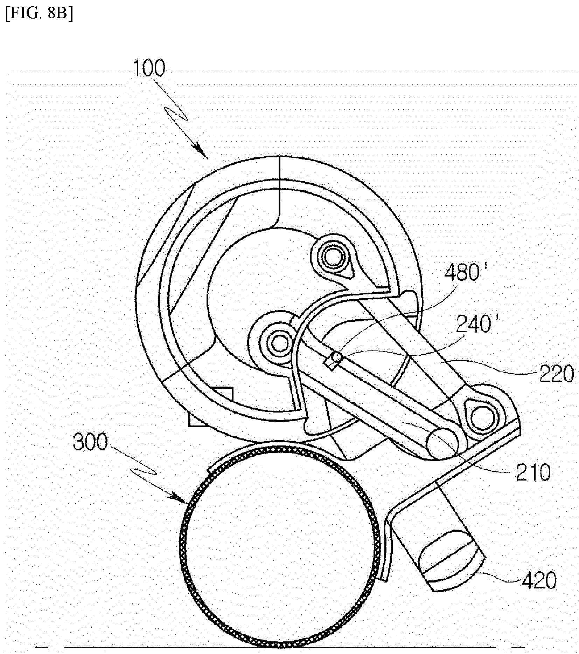

Meanwhile, FIGS. 8A and 8B illustrate another embodiment of the rotation protrusion of the arm and the stopper of the leg part.

In order to avoid the repeated description, the description of the robot 1 according to the embodiment of the present disclosure may be applied to the description of that in another embodiment, except for the components that will be particularly described in the present embodiment, because the robot 1 is identical in configuration and effect to that in another embodiment.

In the present embodiment, a rotation protrusion 480' protrudes from the rotary coupling part 410 and rotates together with the rotary coupling part 410. In this case, the rotation protrusion 480' may protrude from the rotary coupling part 410 toward the inside of the robot main body 100.

In addition, in the present embodiment, a stopper 240' may be formed in a groove shape in the first link 210. Therefore, the stopper 240' may rotate together with the first link 210 in accordance with the rotation of the first link 210.

In this case, a route along which the stopper 240' rotates and a route along which the rotation protrusion 480' rotates may intersect each other on at least one point. At the intersection point, the rotation protrusion 480' may be accommodated in and supported by the stopper 240'.

That is, when the robot 1 begins to be on standby without moving, the leg part 200 may rotate the first link 210 to lower the posture of the robot 1, and the stopper 240' may rotate to the intersection point. In addition, when the rotary coupling part 410 and the connection part 420 rotate, the rotation protrusion 480' also rotates, such that the rotation protrusion 480' is accommodated in the stopper 240'.

Therefore, the rotation protrusion 480' and the stopper 240' may be fitted with and supported by each other, and the posture of the robot 1 may be maintained without a separate operation of the motor.

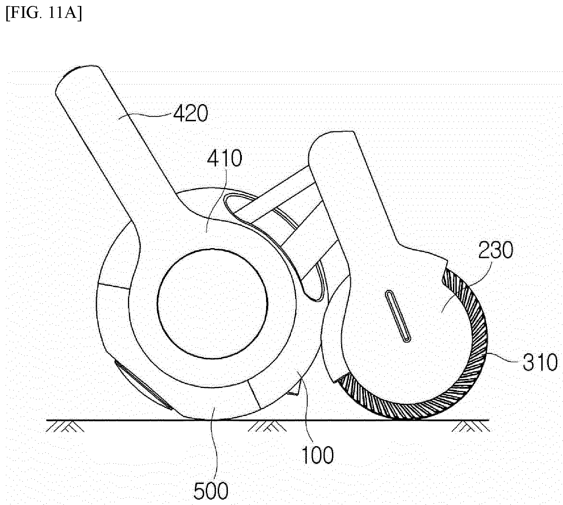

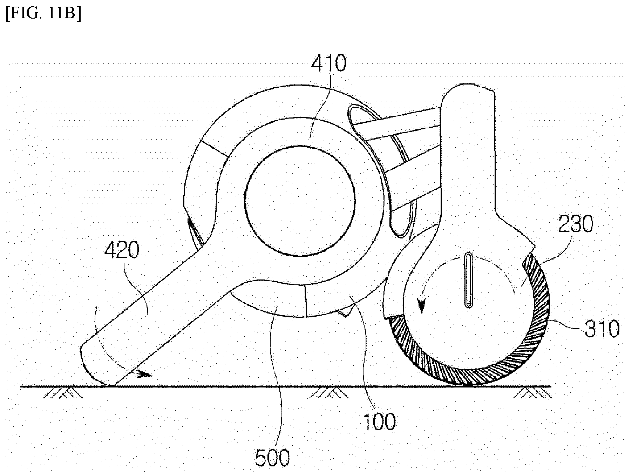

Meanwhile, FIGS. 11A and 11B are views for explaining an operation of the robot according to the embodiment of the present disclosure that stands up after falling forward.

As illustrated in FIGS. 11A and 11B, in the state in which the robot falls forward, the robot 1 may rotate the arm 400 toward the ground surface. For example, the arm 400 may pass over the front side of the robot main body 100 from above the robot main body 100 and rotate to a front lower side of the robot main body 100. That is, the arm 400 may be rotated forward by the operation of the arm motor MA.

During this process, the arm 400 may come into contact with the ground surface. When the robot 1 falls forward, at least a part of a front surface of the robot main body 100 and the pair of wheels 310 come into contact with the ground surface. In this case, when the arm 400 rotates toward the front side of the robot main body 100, the outer end of the arm 400 comes into contact with the ground surface.

Together with the rotation of the arm 400, the wheel 310 may rotate in a direction in which the robot 1 moves forward. That is, the pair of wheels 310 may rotate in a direction in which a distance from the arm 400 decreases.

With the above-mentioned operation, the arm 400 touches the ground surface and raises the robot main body 100 so that the robot main body 100 moves away from the ground surface, and at the same time, the wheels 310 may dig into a lower side of the robot main body 100 while moving forward. Therefore, the robot main body 100 may be raised to an original position.

Therefore, because the single arm of the robot 1 of the present disclosure may touch the ground surface and raise the robot 1, it is possible to prevent the robot 1 from shaking or falling down again during the process in which the robot 1 stands up, and it is possible to minimize the amount of electric power consumed during the process of implementing the operation of raising the robot 1.

In case that the two-wheeled robot in the related art falls down, the pair of wheels need to be instantaneously and strongly rotated, and then the robot needs to be continuously moved in the forward/rearward direction to implement the balance.

In order to solve the problem, a method is present in which the arms provided at the left and right sides of the robot touch the ground surface. However, because the positions at which the pair of arms come into contact with the ground surface are different from each other, the force points at which the robot touches the ground surface to stand up are different from each other, and as a result, the robot may sway while standing up. In this case, there is a limitation in that the robot falls down again.

In contrast, according to the present disclosure, the single arm 400 coupled to the two opposite left and right sides of the robot main body 100 comes into contact with the ground surface at a constant point. Moreover, because at least a part of the outer end of the arm 400 is formed in a surface shape in parallel with the ground surface in the leftward/rightward direction, a comparatively large area may come into contact with the ground surface.

Therefore, during the process in which the robot main body 100 is raised, the robot main body 100 may be stably raised without swaying, which may maintain the balance.

In addition, the robot 1 may stand up only by applying a constant rotational force to the arm 400 and the pair of wheels 310 without instantaneously applying a high rotational force to the wheels, such that it is possible to prevent damage to the motor and reduce overall electric power consumption.

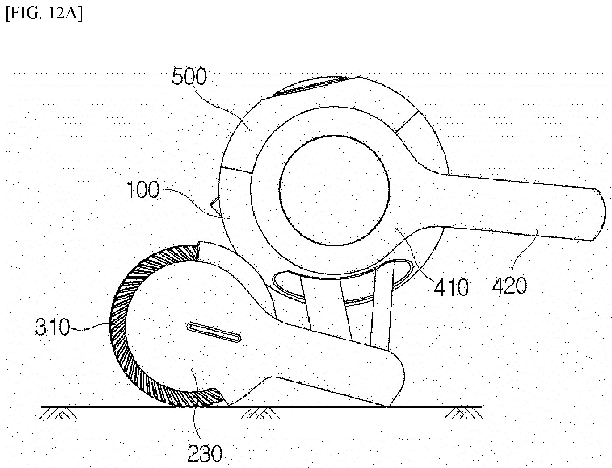

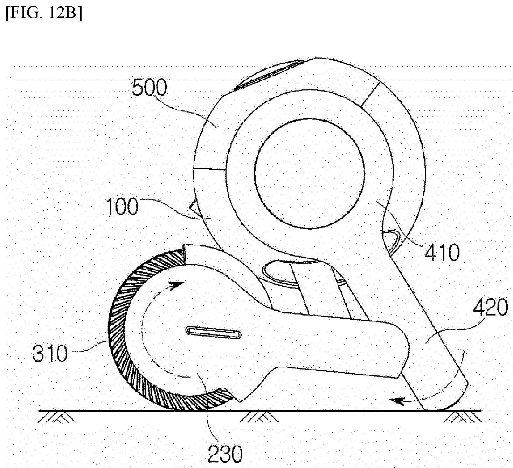

Meanwhile, FIGS. 12A and 12B are views for explaining an operation of the robot according to the embodiment of the present disclosure that stands up after falling rearward.

As illustrated in FIGS. 12A and 12B, in the state in which the robot falls rearward, the robot 1 may rotate the arm 400 toward the ground surface. For example, the arm 400 may pass over the rear side of the robot main body 100 from above the robot main body 100 and rotate to the rear lower side of the robot main body 100. That is, the arm 400 may be rotated rearward by the operation of the arm motor MA.

During this process, the arm 400 may come into contact with the ground surface. When the robot 1 falls rearward, a part of the third link comes into contact with the ground surface. In this case, when the arm 400 rotates toward the rear side of the robot main body 100, the outer end of the arm 400 comes into contact with the ground surface.

Together with the rotation of the arm 400, the wheel 310 may rotate in a direction in which the robot 1 moves rearward. That is, the pair of wheels 310 may rotate in a direction in which the distance from the arm 400 decreases.

With the above-mentioned operation, the arm 400 may touch the ground surface, and the wheels 310 may raise the robot main body 100 and the third links 230 while moving rearward. Therefore, the robot main body 100 may be raised to the original position.

Therefore, because the single arm of the robot 1 of the present disclosure may touch the ground surface and raise the robot 1, it is possible to prevent the robot 1 from shaking or falling down again during the process in which the robot 1 stands up, and it is possible to minimize the amount of electric power consumed during the process of implementing the operation of raising the robot 1.

In addition, according to the present disclosure, the single arm 400 coupled to the two opposite left and right sides of the robot main body 100 comes into contact with the ground surface at a constant point. Moreover, because at least a part of the outer end of the arm 400 is formed in a surface shape in parallel with the ground surface in the leftward/rightward direction, a comparatively large area may come into contact with the ground surface.

Therefore, during the process in which the robot main body 100 is raised, the robot main body 100 may be stably raised without swaying, which may maintain the balance.

In addition, the robot 1 may stand up only by applying a constant rotational force to the arm 400 and the pair of wheels 310 without instantaneously applying a high rotational force to the wheels, such that it is possible to prevent damage to the motor and reduce overall electric power consumption.

In addition, according to the present disclosure, the robot 1 may stand up by switching the rotation directions of the arm 400 and the wheels 310 not only in the case in which the robot 1 falls forward but also in the case in which the robot 1 falls rearward.

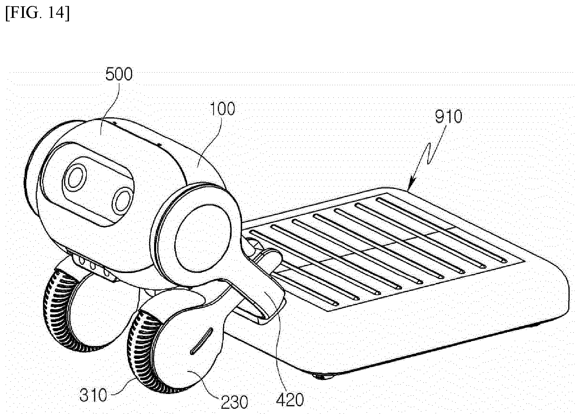

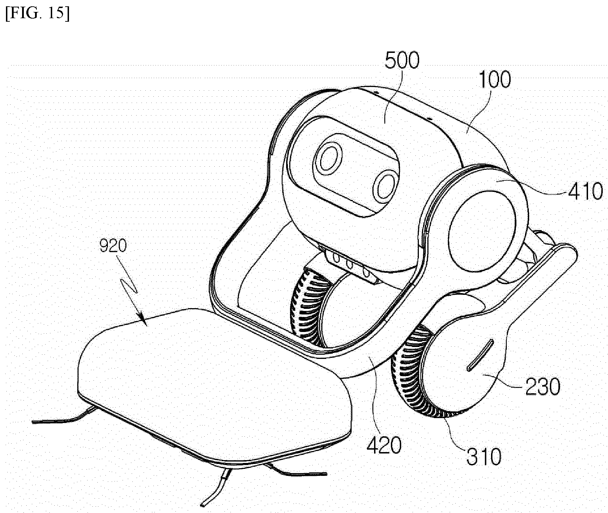

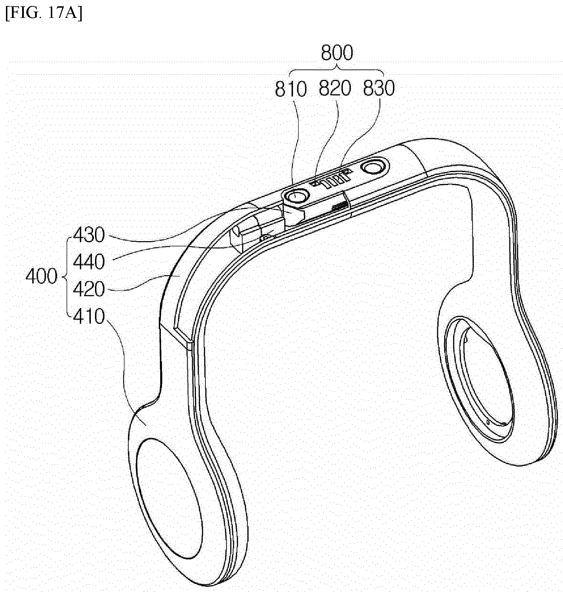

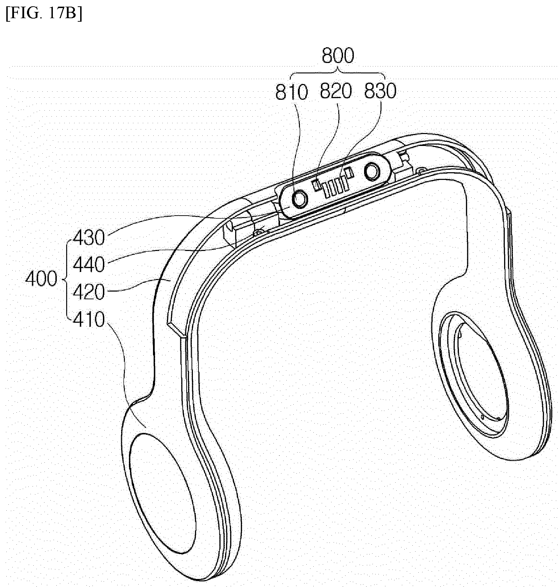

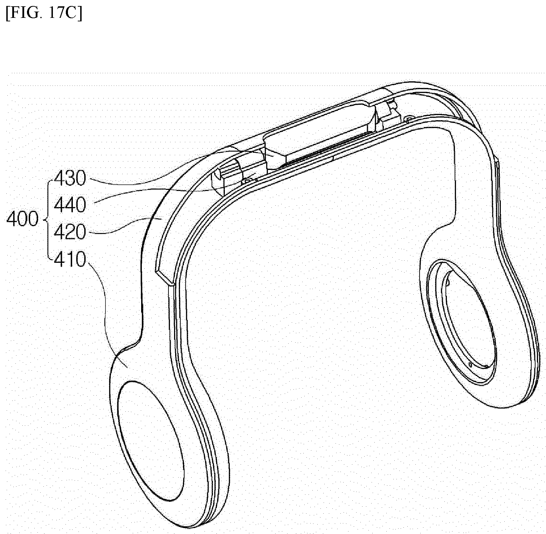

FIGS. 14 and 15 are views for explaining a state in which the robot according to the embodiment of the present disclosure is coupled to the functional module, and FIGS. 17A to 17C are views for explaining a process in which the rotary body of the robot according to the embodiment of the present disclosure rotates.

As illustrated in FIGS. 14 and 15, the arm 400 may be separably coupled to the functional module 900. Specifically, when the arm 400 rotates, a coupling part 800 provided on the arm 400 may approach a coupling structure provided on the functional module 900, and the coupling part 800 and the coupling structure of the functional module 900 may be coupled to each other.

To this end, as illustrated in FIGS. 17A to 17B, the arm 400 of the robot 1 according to the embodiment of the present disclosure may further include the rotary body 430 and the rotation motor 440 so that the arm 400 of the robot 1 is coupled to the functional module 900.

The rotary body 430 may be disposed in the connection part 420. Specifically, the rotary body 430 may be disposed to be rotatable about the connection part 420 as a rotation axis. For example, the rotary body 430 may be disposed in the connection part 420. In another example, the rotary body 430 may be disposed outside the connection part 420 and connected to the connection part 420.

The rotary body 430 is provided in the form of a plate having a predetermined thickness, and the coupling part 800 may be disposed on one surface of the rotary body 430. The rotary body 430 may be formed in a cylindrical shape having a predetermined length, and the coupling part 800 may be disposed at one side of the rotary body 430. In case that the rotary body 430 is formed in a cylindrical shape, the rotary body 430 may be disposed in parallel with the longitudinal direction of the connection part 420.

In this case, the rotary body 430 may be connected to the coupling part 800 so that the coupling part 800 and the rotary body 430 are integrally rotatable.

The rotary body 430, together with the connection part 420, may define an external appearance of the arm 400. Rotary shafts may be provided at two opposite longitudinal ends of the rotary body 430 and coupled to the connection part 420. That is, the rotary shafts may be coupled to the two opposite longitudinal ends of the rotary body 430 in the connection part 420.

The rotation motor 440 may provide a rotational force to the rotary body 430. The rotation motor 440 may be connected to the rotary body 430 and provide the rotational force to the rotary body 430. More specifically, a final output end of a shaft or gear of the rotation motor 440 is connected to the rotary body 430.

With this configuration, when the rotation motor 440 operates, the rotary body 430 may rotate.

When the rotary body 430 rotates, a surface of the rotary body 430 exposed to the outside may be switched. Specifically, one surface of the rotary body 430 on which the coupling part 800 is disposed may be exposed to the outside. An opening portion (not illustrated) may be formed at one side of the connection part 420. In case that the rotary body 430 is disposed in the connection part 420, the coupling part 800 may be exposed to an external space through the opening portion when the rotary body 430 rotates. Further, when the rotary body 430 rotates, the coupling part 800 may be hidden in an internal space of the connection part 1420.

With this configuration, in case that the arm 400 and the functional module 900 do not need to be coupled, the coupling part 800 may be hidden in the connection part 420.

In particular, in case that the robot 1 falls down, the arm 400 needs to rotate to allow the connection part 420 to touch the ground surface. In this case, the coupling part 800 may be sometimes contaminated or damaged while coming into contact with the ground surface.

Therefore, the rotary body 430 of the arm 400 of the present embodiment may be rotated to prevent the coupling part 800 from being exposed to the outside. Further, it is possible to prevent the coupling part 800 from being contaminated or damaged.

With this configuration, the rotary body 430 may be exposed to the outer periphery based on the robot main body 100 so that the rotary body 430 may easily come into contact with an object that approaches the robot 1 from the outside of the robot 1.

The coupling part 800 may be coupled to the functional module 900 in a state in which the rotary coupling part 800 is directed toward the outside of the rotation radius. The coupling part 800 may be coupled to the functional module 900. Specifically, the coupling part 800 may be coupled to the functional module 900 when an outer surface of the connection part 420 is viewed. In this case, the outer surface of the connection part 420 may refer to a surface of the connection part 420 disposed in a direction opposite to the direction directed toward the robot main body 100.

### Coupling Part

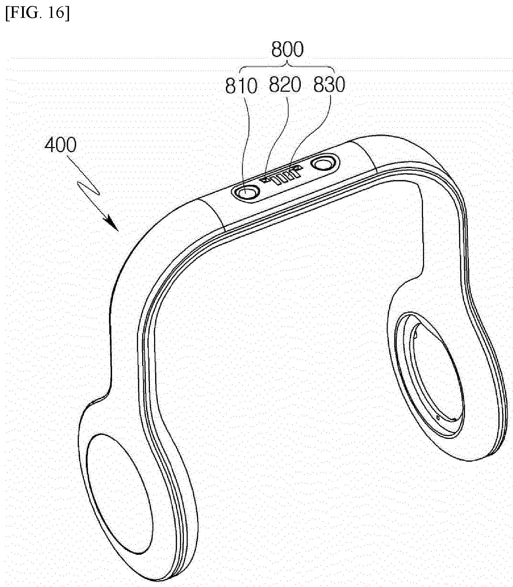

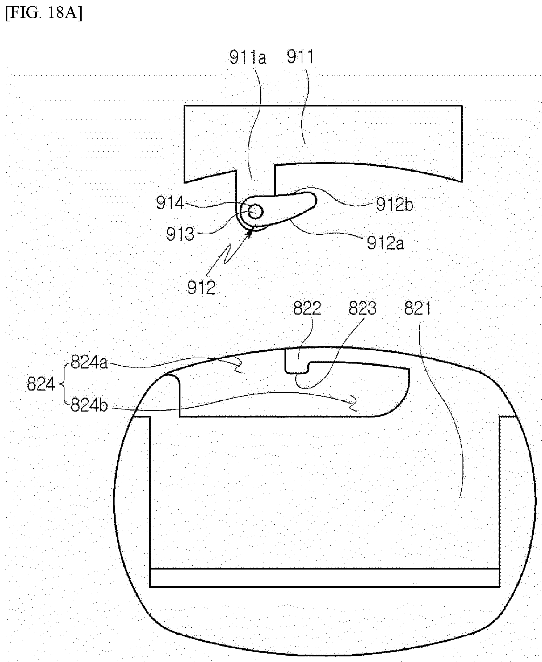

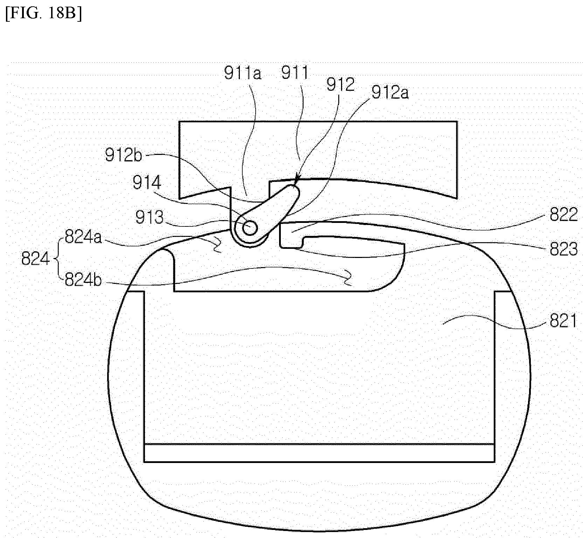

FIG. 16 is a perspective view for explaining the coupling part of the robot according to the embodiment of the present disclosure, FIGS. 17A to 17C are views for explaining a process in which the rotary body of the robot according to the embodiment of the present disclosure rotates, and FIGS. 18A to 18C are views for explaining a process in which the coupling part of the robot according to the embodiment of the present disclosure is coupled to the functional module.

Hereinafter, the coupling structure between the robot 1 and the functional module 900 and a coupling process will be described specifically.

The robot 1 according to the embodiment of the present disclosure and the functional module 900 may be coupled by the coupling part 800. Specifically, the coupling part 800 may couple the functional module 900 and the arm 400 of the robot 1 so that the functional module 900 and the arm 400 of the robot 1 are separable.

With reference to FIG. 16, the coupling part 800 may be disposed on the arm 400. Specifically, the coupling part 800 may be disposed outside the rotation radius of the arm 400. For example, the rotary body 430 may be disposed on the outer surface of the connection part 420. In this case, the outer surface of the connection part 420 may refer to a surface of the connection part 420 disposed in the direction opposite to the direction directed toward the robot main body 100.

With reference to FIGS. 17A to 17C, the coupling part 800 may be disposed on the rotary body 430. The coupling part 800 may be disposed on one surface of the rotary body 430 and exposed to the outside of the connection part 420.

Specifically, when the rotary body 430 is rotated by the rotation motor 440, the surface of the coupling part 800, which is exposed to the outside, may be switched. Therefore, the coupling part 800 may be exposed to the outside of the connection part 420 or hidden in the internal space of the connection part 420 in accordance with the rotation of the rotary body 430.

For example, in case that the coupling part 800 is coupled to the functional module 900, the rotated state of the rotary body 430 may be maintained so that the coupling part 800 faces the outside of the rotation radius of the rotary coupling part 800. In another example, in case that the coupling part 800 is coupled to the functional module 900, the rotated state of the rotary coupling part 800 may be maintained so that the coupling part 800 faces the outside of the rotation radius of the rotary coupling part 800.

The coupling part 800 of the robot 1 according to the embodiment of the present disclosure may include attaching/detaching members 810, catching members 820, and connection terminals 830 separably coupled to the functional module 900. The functional module 900 may have a coupling structure capable of being coupled to the coupling part 800 so as to correspond to the above-mentioned components.

In this case, the robot 1 and the functional module 900 may be physically coupled by the attaching/detaching member 810 and/or the catching member 820 and electrically coupled by the connection terminal 830.

The coupling part 800 of the robot 1 according to the embodiment of the present disclosure may include the attaching/detaching member 810. The attaching/detaching member 810 may be detachably coupled to the functional module 900. Specifically, the attaching/detaching member 810 may be detachably coupled to the functional module 900 by magnetism. That is, the attaching/detaching member 810 may be selectively coupled to or separated from the functional module 900.

The attaching/detaching member 810 may be configured in the form of an electromagnet and selectively apply a magnetic force (attractive force) to the functional module 900 in accordance with a supply of electric power.

For example, the attaching/detaching member 810 may be configured in the form of a circular electromagnet. With this configuration, the attaching/detaching member 810 may form a uniform magnetic field in a large region and be stably coupled to the functional module 900.

In addition, the attaching/detaching members 810 may be provided as a pair of attaching/detaching members 810 disposed at a predetermined distance or interval.

In this case, the catching members 820 and/or the connection terminals 830 may be disposed between the pair of attaching/detaching members 810. That is, the pair of attaching/detaching members 810 may be disposed to be spaced apart from each other with the catching member 820 and/or the connection member interposed therebetween.

With this configuration, the pair of attaching/detaching members 810 may be coupled to an accurate position on an attaching/detaching part 915 provided on the functional module 900 and made of a metallic material (or electromagnet), and the connection terminal 830 may come into contact with an accurate position on a corresponding terminal 916 provided on the functional module 900.

The coupling part 800 of the robot 1 according to the embodiment of the present disclosure may include the catching member 820.

As illustrated in FIGS. 18A to 18C, the catching member 820 may be caught by and coupled to the functional module 900 at a position corresponding to the functional module 900.

In this case, the 'corresponding position' may refer to a position spaced apart forward or rearward from the robot main body 100 by a predetermined distance so that the coupling part 800 and the functional module 900 are coupled. For example, the 'corresponding position' means that the attaching/detaching part 915 of the functional module 900 is positioned in a region of a magnetic field formed by magnetism of the attaching/detaching member 810.

The catching member 820 may be caught by and coupled to the functional module 900. To this end, the catching member 820 may include a catching member main body 821 and a catching projection 822.

The catching member main body 821 may be disposed on the connection part 420. Therefore, the catching member main body 821 may rotate integrally in conjunction with the rotation of the rotary body 430 and/or the rotation of the rotary coupling part 800.

The catching member 820 may have a catching groove 824 into which a hook 912 of the functional module 900 is inserted, and the hook 912 may be inserted into and caught by the catching groove 824. Therefore, in the robot according to the embodiment of the present disclosure, the robot 1 and the functional module 900 may be caught by and coupled to each other only by the operation in which the hook 912 is inserted into the catching groove 824.

The catching projection 822 may protrude from the catching member main body 821. Therefore, when the hook 912 is inserted into the catching groove 824 by a predetermined depth or more, the hook 912 may be supported by being caught inside the catching projection 822.

Meanwhile, the catching projection 822 may protrude from the connection part 420. That is, there is no constraint on the specific disposition and shape as long as the catching projection 822 may define a space, such as the catching groove 824, by which the hook 912 may be caught.

The catching groove 824 may be recessed inside the catching member 820. The catching groove 824 may be formed to be concave downward from an upper surface of the catching member main body 821. In addition, the catching groove 824 may be formed to be concave upward from a lower surface of the catching projection 822.

The catching groove 824 may include a first groove 824a and a second groove 824b. The first groove 824a may refer to an inlet through which a protruding portion 911a enters the inside of the catching member 820. The second groove 824b may refer to a space in which the hook 912 is caught, i.e., a space formed between the catching member main body 821 and the catching projection 822.

A coupling structure of the functional module 900 caught by and coupled to the catching member 820 of the robot 1 will be described below with reference to FIGS. 18A to 18C.

Hereinafter, only the coupling structure of the functional module 900 caught by and coupled to the catching member 820 of the robot 1 will be described, and a detailed description of the functional module 900 will be described later.

Meanwhile, an example will be described in which the functional module 900 coupled to the catching member 820 to be described below is a transport module 910. However, the coupling structure to be described below is not limited to the transport module 910 but may be applied to various function modules 900 including a cleaning module 920.

The transport module 910 coupled to the catching member 820 according to the embodiment of the present disclosure may include a module main body 911, the hook 912, a shaft 913, an elastic part 914, the attaching/detaching part 915, and the corresponding terminal 916.

The module main body 911 may be formed in a hexahedral shape having a predetermined volume so that various types of components configured to allow the transport module 910 to perform the functions may be embedded.

In this case, the module main body 911 may be disposed at a position corresponding to the robot main body 100. In this case, the 'corresponding position' may refer to a position spaced apart forward or rearward from the robot main body 100 by a predetermined distance so that the coupling part 800 and the transport module 910 are coupled. For example, the 'corresponding position' means that the attaching/detaching part 915 of the transport module 910 is positioned in a region of a magnetic field formed by magnetism of the attaching/detaching member 810.

The module main body 911 may have the protruding portion 911a protruding outward. The protruding portion 911a may be inserted into the first groove 824a in case that the catching member 820 and the functional module 900 are coupled.

In this case, the protruding portion 911a may be formed to have a width smaller than a width of the first groove 824a so that the protruding portion 911a may be easily inserted into the first groove 824a. In addition, a maximum length of the protruding portion 911a may be shorter than a maximum depth of the first groove 824a in order to prevent the occurrence of swaying caused by the spacing between the hook 912 and the catching projection 822 in the state in which the protruding portion 911a is completely inserted.

The hook 912 may be rotatably coupled to the module main body 911. Specifically, the hook 912 may be rotatably coupled to the protruding portion 911a of the module main body 911. In this case, the hook 912 may rotate about the shaft 913 coupled to the protruding portion 911a. Therefore, when the hook 912 is rotated by being pressed by the catching projection 822, the hook 912 may be inserted and caught inside the catching groove 824.

The functional module 900 may include the elastic part 914 configured to provide an elastic force to the rotation of the hook 912 in order to maintain the state in which the hook 912 is caught by the catching projection 822.

The elastic part 914 may be a torsion spring. The elastic part 914 may be wound to surround an outer side of an outer peripheral surface of the shaft 913. Specifically, one end of the elastic part 914 may be fixedly coupled to the shaft 913, and the other end of the elastic part 914 may be fixedly coupled to the hook 912.

In this case, when the hook 912 rotates in one direction while being inserted into the catching groove 824, the elastic part 914 may generate an elastic force. That is, the elastic part 914 may apply a restoring force (elastic force) so that the hook 912 rotates in a direction opposite to one direction. Therefore, the catching member 820 and the functional module 900 may maintain the state in which the functional module 900 is coupled to the catching groove 824.

Meanwhile, a process in which the catching member 820 is coupled to the functional module 900 will be described below with reference to FIGS. 18A to 18C.

First, when the protruding portion 911a of the module main body 911 is inserted into the first groove 824a, a first contact surface 912a of the hook 912 is pressed by the catching projection 822, such that the hook 912 may rotate inward (counterclockwise in FIGS. 18A to 18C). In this case, the elastic part 914 may apply an elastic force to the hook 912 in a direction in which the hook 912 rotates outward (clockwise in FIGS. 18A to 18C) again.

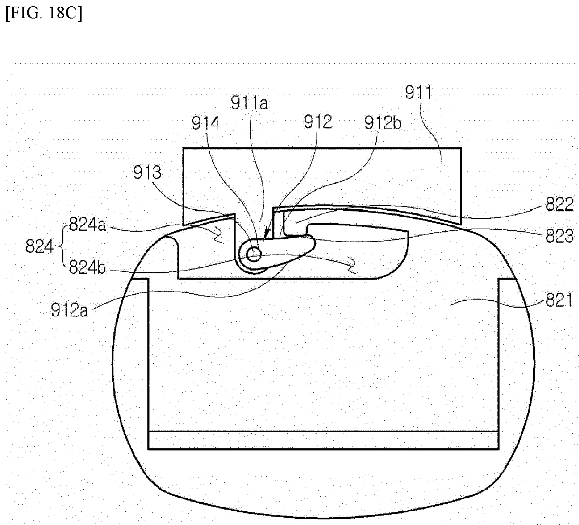

As illustrated in FIG. 18C, when the protruding portion 911a and the hook 912 are completely inserted into the first groove 824a, the hook 912 may be rotated outward (counterclockwise in FIG. 18C) again by the elastic force of the elastic part 914, and at least a part of the hook 912 may be disposed in the second groove 824b that is the internal space of the catching groove 824. Therefore, in case that the robot 1 is moved in the state in which the hook 912 is rotated outward, a second contact surface 912b of the hook 912 is supported by a catching surface 823 disposed inside the catching projection 822, such that the functional module 900 disposed may move together with the robot 1 at the front or rear side of the robot 1.

Meanwhile, the attaching/detaching member 810 may be coupled to the accurate position on the attaching/detaching part 915 provided on the functional module 900 and made of a metallic material (or provided in the form of an electromagnet) and guide the hook 912 of the catching member 820 so that the hook 912 is inserted into the accurate position on the catching groove 824 provided in the functional module 900. That is, the attaching/detaching member 810 having magnetism is coupled to the functional module 900 by an attractive magnetic force, such that the hook 912 may be inserted into and caught by the catching groove 824 while rotating by being pressed by the catching projection 822.

Therefore, the hook 912 may be stably caught by the catching groove 824 even in case that the hook 912 rectilinearly moves in the direction in which the hook 912 is pressed by the catching member 820.

In addition, because the attaching/detaching member 810 is coupled to the attaching/detaching part 915 by magnetism, an attractive force may be generated between the attaching/detaching part 915 and the functional module 900, and the catching member 820 may be caught by and coupled to the functional module 900 by the attractive force without a separate driving source.

Meanwhile, in case that the catching member 820 is intended to be separated from the functional module 900, the catching member 820 may be released during a process in which the rotary body 430 is rotated and the hook 912 is separated from the catching groove 824.

Specifically, the hook 912 cannot be separated from the catching groove 824 in the state in which the hook 912 is caught by the catching projection 822. Therefore, the hook 912 may be separated from the catching groove 824 as the rotary body 430 rotates so that the hook 912 is separated in a direction in which the first groove 824a is opened (clockwise in FIG. 18C).

In addition, in case that the catching member 820 is intended to be separated from the functional module 900, the catching member 820 may be released during a process in which the rotary coupling part 800 is rotated and the hook 912 is separated from the catching groove 824.

Specifically, the hook 912 cannot be separated from the catching groove 824 in the state in which the hook 912 is caught by the catching projection 822. Therefore, the hook 912 may be separated from the catching groove 824 as the rotary coupling part 800 rotates so that the hook 912 is separated in a direction in which the first groove 824a is opened (clockwise in FIG. 18C).

Meanwhile, the example has been described in which the catching member 820 is disposed on the coupling part 800 of the robot 1. On the contrary, a component identical in structure to the catching member 820 may be applied to the functional module 900, and components identical in structures to the module main body 911, the hook 912, the shaft 913, and the elastic part 914 may be applied to the catching member 820. If a component identical in structure to the catching member 820 is applied to the functional module 900, the catching member 820 according to the embodiment of the present disclosure and the functional module 900 corresponding to the catching member 820 are identical in structures and effects to the component. Therefore, the same description may be applied.

The connection terminal 830 of the robot 1 according to the embodiment of the present disclosure may be electrically connected to the functional module 900. Specifically, the connection terminal 830 may be electrically connected to and come into contact with the corresponding terminal 916 provided on the functional module 900.

A spring (not illustrated) may be coupled to the connection terminal 830 and/or the corresponding terminal 916 of the functional module 900. Specifically, the spring may be provided at a lower end of the connection terminal 830 and/or a lower end of the corresponding terminal 916 so as to be elastically compressed in case that the connection terminal 830 and the corresponding terminal 916 press each other.

The spring may apply a force (elastic force) in a direction in which the connection terminal 830 and the corresponding terminal 916 are tightly attached to each other. Therefore, in case that the coupling part 800 is coupled to the functional module 900, the spring is elastically compressed as the connection terminal 830 and the corresponding terminal 916 are pressed against each other, such that the connection terminal 830 and the corresponding terminal 916 may be more stably tightly attached.

In the present embodiment, the connection terminal 830 may be made by collecting and disposing a terminal capable of supplying electric power to the functional module 900 and a terminal capable of transmitting or receiving a signal to or from the functional module 900. For example, the connection terminal 830 may have pogo pins including two electric power pins and four signal pins. However, the number of electric power pins and the number of signal pins are not limited. That is, the connection terminal 830 may have pogo pins including two electric power pins and two signal pins. In this case, in order to prevent the occurrence of a short circuit accident, the pair of electric power pins may be disposed to be spaced apart from each other in a longitudinal direction of the connection part 420 with the signal pins interposed therebetween.

With this configuration, electric power of the robot main body 100 may be supplied to the functional module 900 through the connection terminal 830, or electric power of the functional module 900 may be supplied to the robot main body 100 through the connection terminal 830. In addition, the robot main body 100 may transmit or receive an electrical signal to or from the functional module 900 through the connection terminal 830.

### Functional Module

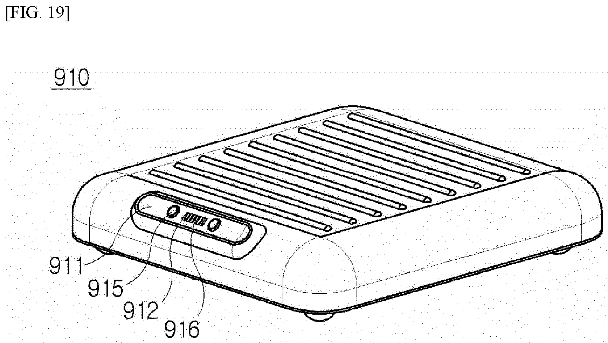

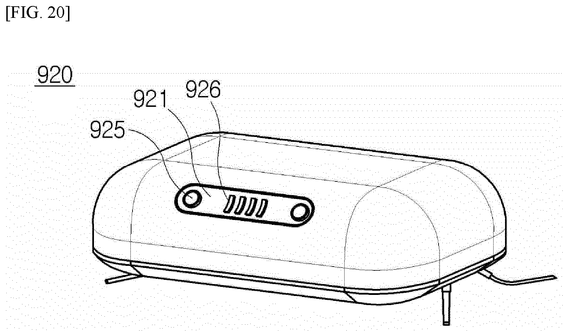

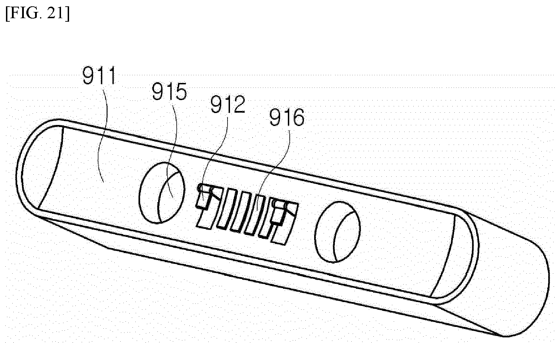

FIGS. 19 and 20 are perspective views of the functional module coupled to the robot according to the embodiment of the present disclosure, and FIG. 21 is an enlarged view for explaining a detailed configuration of the functional module coupled to the robot according to the embodiment of the present disclosure.

The functional module 900 coupled to the robot 1 according to the embodiment of the present disclosure will be described below with reference to FIGS. 19 to 21.

The robot 1 according to the embodiment of the present disclosure may be separably coupled to the functional module 900. In this case, the functional module 900 refers to a constituent element coupled to the robot main body 100 through the arm 400 and configured to provide various functions to the robot 1.

The functional module 900 may be separably coupled to the arm 400. Specifically, the functional module 900 may be separably coupled to the arm 400 by the coupling part 800 disposed on the arm 400.

As described above, the functional module 900 may have the coupling structures corresponding to the attaching/detaching member 810, the catching member 820, and the connection terminal 830 of the coupling part 800.

For example, the functional module 900 may have the attaching/detaching part 915 detachably coupled to the attaching/detaching member 810 of the coupling part 800 by magnetism.

In addition, the functional module 900 may have the hook structure caught by and coupled to the catching member 820 of the coupling part 800.

In addition, the functional module 900 may have the corresponding terminal 916 corresponding to the connection terminal 830 of the coupling part 800. The corresponding terminal 916 may come into contact with the connection terminal 830, receive electric power from the robot main body 100, and transmit or receive an electrical signal to or from the robot main body 100.

Although not illustrated, the functional module 900 may have a lamp. The lamp may emit light to inform of a position of the functional module 900. For example, the lamp may be an infrared (IR) light-emitting diode (LED). With this configuration, the IR sensor 620 disposed on the robot main body 100 may detect the position of the functional module 900, and the robot main body 100 may travel toward the functional module 900.

The functional module 900 may include various components in accordance with the function.

In case that different functional modules 900 are provided, the user may add or change the service provided by the robot 1 according to the present disclosure as the arm 400 changes the functional module 900, as necessary.

For example, as illustrated in FIGS. 14 and 19, the functional module 900 may be the transport module 910. The transport module 910 may include a support plate configured to support an object, and a transport wheel coupled to a lower side of the support plate and configured to roll on the ground surface.

The support plate is provided so that an object may be placed on an upper portion of the support plate. For example, the support plate is formed in a block shape having a predetermined thickness, and a space in which an object may be placed may be provided in an upper surface of the support plate.

In addition, an anti-slip pad may be disposed on the upper surface of the support plate so that the object placed on the upper surface of the support plate does not slip. The anti-slip pad may be made of a material with a high frictional force, such as silicone or polyurethane (PU) that is mainly made of artificial leather, which is excellent in preventing a slip. However, the present disclosure is not limited thereto.

A plurality of protrusions, which are made of a material with a high frictional force, such as silicone or polyurethane (PU) that is mainly made of artificial leather, may be disposed on the anti-slip pad, thereby further maximizing a frictional force.

The transport wheel may be coupled to the lower side of the support plate and roll on the ground surface.

Meanwhile, according to the embodiment, the transport module 910 may further include a motor (not illustrated) configured to provide power to the transport wheel. When the motor (not illustrated) of the transport module 910 operates, the motor may move a heavier object.

Meanwhile, in the present embodiment, the transport module 910 may be coupled to a rear side of the robot main body 100. In case that the transport module 910 is coupled to the rear side of the robot main body 100, the robot main body 100 may be disposed forward of the transport module 910 and guide a movement direction of the transport module 910. That is, the transport module 910 may move in the movement direction of the robot main body 100. This may appear to the user as if the robot main body 100 drags and moves the transport module 910 by means of the arm 400.

On the contrary, in the present embodiment, the transport module 910 may be coupled to a front side of the robot main body 100. In case that the transport module 910 is coupled to the front side of the robot main body 100, the robot main body 100 may be disposed rearward of the transport module 910 and push and move the transport module 910.

In another example, as illustrated in FIGS. 15 and 20, the functional module 900 may be the cleaning module 920.

The cleaning module 920 may include a module body 921, a suction nozzle, and a dust bin. With this configuration, when the functional module 900 is coupled to the arm 400, the robot 1 may perform a dry cleaning operation.

The cleaning module 920 may be detachably coupled to the arm 400.

For example, an attaching/detaching part 925 may be disposed on the module body 921 of the cleaning module 920 and detachably coupled to the attaching/detaching member 810 by magnetism. In addition, a corresponding terminal 926 electrically connected to the connection terminal 830 may be disposed on the module body 921 of the cleaning module 920.

In addition, the module body 921 may be formed in a hexahedral shape having a predetermined volume, and a flow path capable of sucking dust may be formed in the module body 921.

The suction nozzle (not illustrated) capable of sucking dust may be provided on a bottom surface of the module body 921. Further, the dust bin capable of storing sucked dust may be disposed in the module body 921. A motor (not illustrated) configured to provide a force for sucking air may be provided in the module body 921. In this case, the wheel may be provided on the bottom surface of the module body 921. In addition, an agitator may be provided on the bottom surface of the module body 921. In addition, a side brush may be further provided on the bottom surface of the module body 921. Further, a motor configured to provide driving power to the agitator and/or the wheel may be further provided in the module body 921.

Meanwhile, in the present embodiment, the cleaning module 920 may be coupled to the front side of the robot main body 100. In case that the cleaning module 920 is coupled to the front side of the robot main body 100, the robot main body 100 may be disposed rearward of the cleaning module 920 and move together with the cleaning module 920. The cleaning module 920 may change a traveling direction in accordance with the movement of the robot main body 100. This may appear to the user as if the robot main body 100 pushes the cleaning module 920 and performs the cleaning operation by means of the arm 400.

On the contrary, in the present embodiment, the cleaning module 920 may be coupled to a rear side of the robot main body 100. In case that the cleaning module 920 is coupled to the rear side of the robot main body 100, the robot main body 100 may be disposed forward of the cleaning module 920 and guide the movement direction of the cleaning module 920. That is, the cleaning module 920 may move in the movement direction of the robot main body 100. This may appear to the user as if the robot main body 100 drags and moves the cleaning module 920 by means of the arm 400.

Although not illustrated, in another example, the functional module 900 may include a pair of rags configured to rotate about a rotary shaft, and a water container configured to store water to be supplied to the rags. With this configuration, when the functional module 900 is coupled to the robot main body 100, the robot 1 may perform a wet cleaning operation.

Although not illustrated, in another example, the functional module 900 may include an arm and a gripper. With this configuration, when the functional module 900 is coupled to the robot main body 100, the gripper may hold and lift a mobile phone or a large object and transport the mobile phone or the object to another location.

### Robot Mask

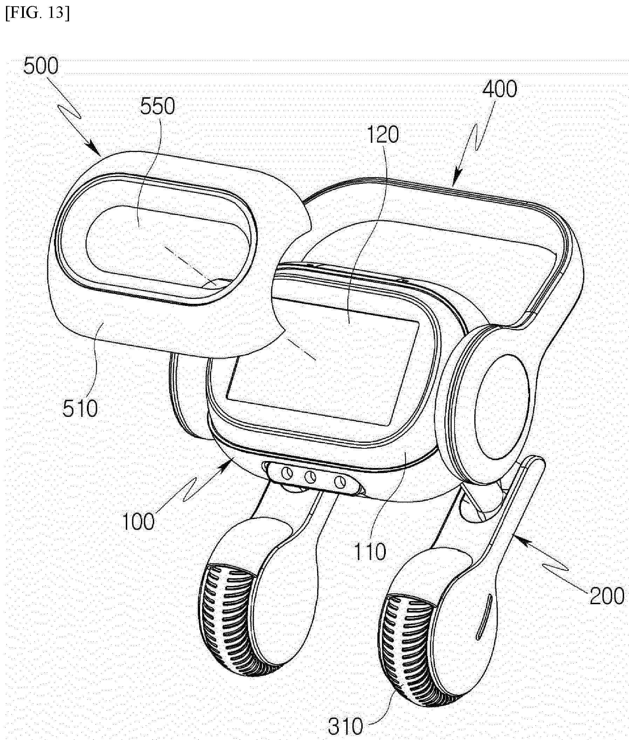

FIG. 13 is a view for explaining a coupling relationship between the robot mask and the robot main body of the robot according to the embodiment of the present disclosure.

The robot 1 according to the embodiment of the present disclosure may further include the robot mask 500.

The robot mask 500 may be detachably coupled to the robot main body 100 and cover the display 120. The robot mask 500 may be coupled to the robot main body 100 and constitute an external appearance of the robot 1.

Meanwhile, the robot mask 500 according to the embodiment of the present disclosure may include a window 550 through which an image displayed by the display 120 is exposed to the outside when the window 550 is coupled to the robot main body 100.

The window 550 may be disposed on a mask main body 510. Specifically, the window 550 may be disposed while penetrating the mask main body 510. In case that the robot mask 500 is coupled to the robot main body 100, the window 550 may be disposed at a position facing the display 120.

The window 550 may be made of a material that may transmit light. For example, the window 550 may be made of a transparent material.

Meanwhile, when the robot mask 500 is coupled to the robot main body 100, the display 120 may display a face and a facial expression.

The robot 1 may display the shape of the face, such as the eyes, nose, and mouth, on the display 120 to allow the user to feel that the robot expresses emotions.

In this way, the robot 1 may provide a pet robot service that shows emotions to the user and communicates with the user, and the robot 1 may have the effect of providing emotional stability to the user.

As described above, the robot 1 may display facial expressions on the display 120 to visually display emotions, and the robot 1 may also display emotions through a voice output of the speaker 450.

For example, it is possible to output sounds of laughter, surprise, and the like in response to facial expressions displayed on the display 120.

In addition, the robot 1 may display facial expressions on the display 120 to visually display emotions, and the robot 1 may also display emotions by rotating the arm 400.

For example, the robot may display a smiling facial expression on the display 120 and display emotions by shaking the arm 400.

### Control Configuration

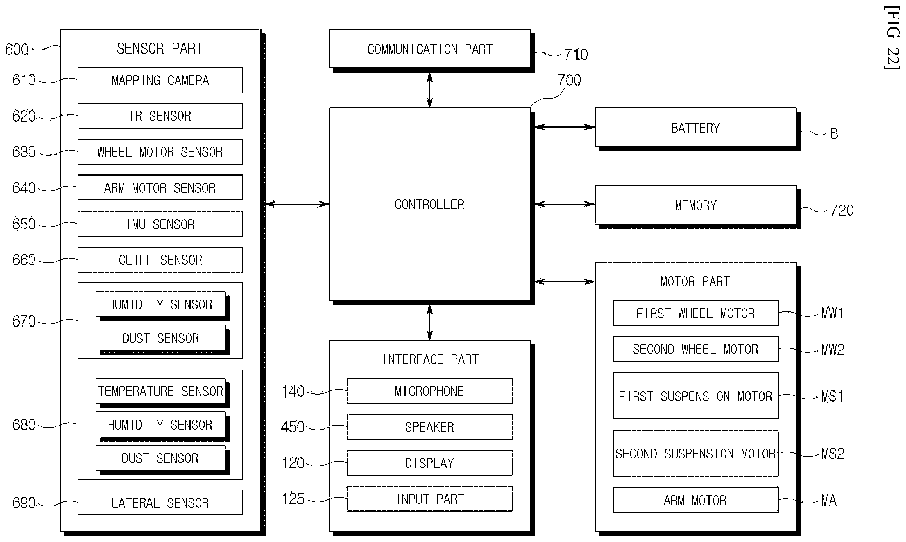

FIG. 22 is a block diagram for explaining a control configuration of the robot according to the embodiment of the present disclosure.

With reference to FIG. 22, the robot 1 according to the embodiment of the present disclosure may include a sensor part 600, the controller 700, the communication part 710, a memory 720, the battery B, a motor part, and an interface part.

The constituent elements illustrated in the block diagram in FIG. 22 are not essential to implement the robot 1. The robot 1, which is described in the present specification, may have constituent elements larger or smaller in number than the constituent elements listed above.

First, the controller 700 may control an overall operation of the robot 1. The controller 700 may perform control to allow the robot 1 to perform various functions based on setting information stored in the memory 720 to be described below.

The controller 700 may be disposed on the robot main body 100. More specifically, the controller 700 may be mounted and provided on a PCB disposed in the main body housing 110.

The controller 700 may include any type of device capable of processing data, such as a processor. Here, the 'processor' may refer to a data processing device embedded in hardware and having, for example, a circuit physically structured to perform a function represented by codes or instructions included in a program. Examples of the data processing device embedded in hardware may include processing devices such as a microprocessor, a central processing unit (CPU), a processor core, a multiprocessor, an application-specific integrated circuit (ASIC), or a field programmable gate array (FPGA), but the scope of the present disclosure is not limited thereto.

The controller 700 may receive information on an external environment of the robot 1 from at least one of the components of the sensor part 600 to be described below. In this case, for example, the information on the external environment may be information on a temperature, a humidity, the amount of dust, and the like in the interior in which the robot 1 travels. Alternatively, for example, the information may be information on a cliff. Alternatively, for example, the information may be information on an interior map. Of course, the information on the external environment is not limited to the above-mentioned examples.

The controller 700 may receive information on a current state of the robot 1 from at least one of the components of the sensor part 600 to be described below. In this case, for example, the current state may be information on a gradient of the robot main body 100. Alternatively, for example, the information may be information on a spaced state between the wheel 310 and the ground surface. Alternatively, for example, the information may be information on a position of the wheel motor MW. Alternatively, for example, the information may be information on a position of the suspension motor MS. Of course, the information on the current state of the robot 1 is not limited to the above-mentioned example.

The controller 700 may transmit a driving control instruction to at least one of the components of the motor part to be described below. For example, the rotation of the wheel motor MW may be controlled to allow the robot 1 to travel. Alternatively, for example, the rotation of the wheel motor MW may be controlled to maintain a horizontal posture of the robot 1. Alternatively, for example, the rotation of the suspension motor MS may be controlled to maintain the horizontal posture of the robot 1.

The controller 700 may receive the user's instruction through at least one of the components of the interface part to be described below. For example, the instruction may be an instruction for turning on or off the robot 1. Alternatively, for example, the instruction may be an instruction for manually controlling various types of functions of the robot 1.

The controller 700 may output the information on the robot 1 through at least one of the components of the interface part to be described below. For example, the outputted information may be visual information. Alternatively, for example, the outputted information may be auditory information.

The motor part may include at least one motor and provide driving power to components connected to the motor.

The motor part may include the wheel motors MW configured to provide driving power to the left and right wheels 310. More specifically, the motor part may include a first wheel motor MW1 configured to transmit driving power to the wheel 310 disposed at one side based on the leftward/rightward direction, and a second wheel motor MW2 configured to transmit driving power to the wheel 310 disposed at the other side based on the leftward/rightward direction.

The wheel motors MW may be respectively disposed in the wheel parts 300. More specifically, the wheel motor MW may be accommodated in the third link 230.

The wheel motor MW is connected to the wheel 310. More specifically, a final output end of a shaft or gear of the first wheel motor MW 1 is connected to the wheel 310 disposed at one side based on the leftward/rightward direction. A final output end of a shaft or gear of the second wheel motor MW2 is connected to the wheel 310 disposed at the other side based on the leftward/rightward direction. The wheel motors MW at the left and right sides rotate by being operated in response to the control instruction of the controller 700, and the robot 1 travels along the ground surface by the rotations of the wheels 310 performed by the rotations of the wheel motors MW.

The motor part may include the suspension motors MS configured to provide driving power to the left and right leg parts 200. More specifically, the motor part may include a first suspension motor MS1 configured to transmit driving power to the leg part 200 disposed at one side based on the leftward/rightward direction, and a second suspension motor MS2 configured to transmit driving power to the leg part 200 disposed at the other side based on the leftward/rightward direction.

The suspension motor MS may be disposed on the robot main body 100. More specifically, the suspension motors MS may be accommodated in the main body housing 110.

The suspension motor MS is connected to the first link 210. More specifically, the final output end of the shaft or gear of the first suspension motor MS1 is connected to the first link 210 disposed at one side based on the leftward/rightward direction. The final output end of the shaft or gear of the second suspension motor MS2 is connected to the first link 210 disposed at the other side based on the leftward/rightward direction. The suspension motors MS at the left and right sides may rotate by being operated in response to the control instruction of the controller 700. As the suspension motor MS rotates, the first link 210 rotates, and the third link 230 connected to the first link 210 rotates, and as a result, an angle between the first link 210 and the third link 230 may be changed.

Therefore, the robot 1 may operate to raise or lower the wheels 310, thereby maintaining the horizontal posture when the robot 1 climbs over an obstacle or travels along a curved ground surface. Alternatively, the downward movement or upward movement of the robot main body 100 may be performed.

The motor part may include the arm motor MA configured to provide a rotational force to the arm 400.

The arm motor MA may be disposed on the robot main body 100. More specifically, at least one arm motor MA may be accommodated in the main body housing 110.

The arm motor MA may rotate by being operated in response to the control instruction of the controller 700. As the arm motor MA rotates, the rotary coupling part 410 rotates, the connection part 420 integrated with the rotary coupling part 410 rotates, and as a result, the arm 400 may pivot relative to the robot main body 100.

Therefore, the robot 1 may rotate the arm 400 and be coupled to the functional module 900 by rotating the arm 400. Alternatively, when the arm 400 rotates, the arm 400 may touch the ground surface.

The sensor part 600 may include at least one sensor, and the sensor may measure or detect the information on the external environment of the robot 1 and/or the information on the current state of the robot 1.

The sensor part 600 may include the mapping camera 610.

The mapping camera 610 is provided to map the interior in which the robot 1 travels.

To this end, the mapping camera 610 may be disposed at the front side of the robot main body 100. More specifically, the mapping camera 610 may be disposed forward of the main body housing 110.

The mapping camera 610 may capture images of the interior to perform simultaneous localization and mapping (SLAM). The controller 700 may implement the SLAM on the basis of information on a surrounding environment captured by the mapping camera 610 and information on a current position of the robot 1.

Meanwhile, the method of implementing the SLAM by the robot 1 according to the embodiment of the present disclosure may be a method implemented only by the mapping camera 610. However, the present disclosure is not limited thereto. For example, the robot 1 may also implement the SLAM by further utilizing a sensor additionally provided. For example, the additional sensor may be a laser distance sensor (LDS).

The sensor part 600 may include the IR sensors 620 configured to detect infrared rays.

The IR sensor 620 may be an IR camera configured to detect infrared rays.

The IR sensor 620 may be disposed on the robot main body 100. More specifically, the IR sensor 620 may be disposed at the front side of the main body housing 110. The IR sensors 620 may be disposed at the left and right sides of the mapping camera 610.

The IR sensor 620 may detect infrared rays emitted from an IR LED provided on a particular module and approach the module. For example, the module may be a charging stand configured to charge the robot 1. For example, the module may be the functional module 900 provided to be detachable from the arm 400.

In case that a state of charge of the robot 1 is a preset level or lower, the controller 700 may perform control to allow the IR sensor 620 to begin to detect the IR LED. In case that the controller 700 receives an instruction to search for a particular module from the user, the controller 700 may perform control to allow the IR sensor 620 to begin to detect the IR LED.

The sensor part 600 may include a wheel motor sensor 630.

The wheel motor sensor 630 may measure a position of the wheel motor MW. For example, the wheel motor sensor 630 may be an encoder. As well known, the encoder may detect a position of the motor and further detect a rotational speed of the motor.

The wheel motor sensor 630 may be disposed in each of the left and right wheel motors MW. More specifically, the wheel motor sensor 630 may be connected to the final output end of the shaft or gear of the wheel motor MW and accommodated in the third link 230 together with the wheel motor MW.

The sensor part 600 may include an arm motor sensor 640.

The arm motor sensor 640 may measure a position of the arm motor MA. For example, the arm motor sensor 640 may be an encoder. As well known, the encoder may detect a position of the motor and further detect a rotational speed of the motor.

The arm motor sensor 640 may be disposed in the arm motor MA. More specifically, the arm motor sensor 640 may be connected to the final output end of the shaft or gear of the arm motor MA and accommodated in the main body housing 110 or the rotary coupling part 410 together with the arm motor MA.

The sensor part 600 may include an IMU sensor 650.

The IMU sensor 650 may measure an inclination angle of the robot main body 100.

As well known, the IMU (inertial measurement unit) sensor 650 is a sensor embedded with a three-axis acceleration sensor, a three-axis gyro sensor, and a terrestrial magnetism sensor and also called an inertia measurement sensor.

The three-axis acceleration sensor is a sensor configured to detect a gravitational acceleration of an object in a stationary state. Because the gravitational acceleration varies depending on an angle at which an object is inclined, a gradient angle is obtained by measuring the gravitational acceleration. However, there is a disadvantage in that a correct value cannot be obtained in an accelerated state instead of a stationary state.

The three-axis gyro sensor is a sensor configured to measure an angular velocity. The gradient angle is obtained by integrating the angular velocity over the overall time. However, the angular velocity measured by the gyro sensor has continuous errors caused by noise and the like. These errors cause errors in the integral value that accumulate and occur over time.

As a result, when the robot 1 is in the stationary state for a long time, the gradient may be accurately measured by the acceleration sensor, but an error occurs by the gyro sensor. When the robot 1 travels, the gyro sensor may measure the correct gradient value, but the acceleration sensor cannot obtain the correct value.

The IMU sensor may be used to compensate for the above-mentioned drawbacks of the acceleration sensor and the gyro sensor.

In the present specification, the embodiment in which the IMU sensor is provided will be described.

The IMU sensor may be disposed on the robot main body 100. More specifically, the IMU sensor may be disposed adjacent to the controller 700. The IMU sensor may be mounted and provided on a PCB disposed in the robot main body 100. The IMU sensor may be disposed to be close to a central region of the robot main body 100 in order to improve the accuracy in measuring the inclination angle and the direction.

The IMU sensor may measure at least one of a three-axis acceleration, a three-axis angular velocity, and three-axis terrestrial magnetism data of the robot main body 100 and transmit at least one of the three-axis acceleration, the three-axis angular velocity, and the three-axis terrestrial magnetism data to the controller 700.

The controller 700 may calculate an inclination direction and an inclination angle of the robot main body 100 by using at least one of the acceleration, the angular velocity, and the terrestrial magnetism data received from the IMU sensor. The controller 700 may maintain and control the horizontal posture of the robot main body 100 to be described below on the basis of the inclination direction and the inclination angle.

The sensor part 600 may include a cliff sensor 660 configured to detect a cliff.

The cliff sensor 660 may be configured to detect a distance from the front ground surface on which the robot 1 travels. The cliff sensor 660 may be variously configured within a range in which the cliff sensor 660 may detect a relative distance between the ground surface and a point at which the cliff sensor 660 is provided.

For example, the cliff sensor 660 may include a light-emitting part configured to emit light, and a light-receiving part configured to receive reflected light. The cliff sensor 660 may be configured as an infrared sensor.

The cliff sensor 660 may be disposed on the robot main body 100. More specifically, the cliff sensor 660 may be disposed inside the robot main body 100. The cliff sensor 660 may emit light toward a floor surface disposed forward of the robot 1. The cliff sensor 660 may detect in advance whether a cliff exists in front of the robot 1 in the traveling direction.

The light-emitting part of the cliff sensor 660 may emit light obliquely toward the front floor surface. The light-receiving part of the cliff sensor 660 may receive the incident light reflected by the floor surface. A distance between the front ground surface and the cliff sensor 660 may be measured on the basis of a difference between a light emitting time point and a light receiving time point.

A case in which the distance measured by the cliff sensor 660 exceeds a preset predetermined value or exceeds a predetermined range may be a case in which the front ground surface is suddenly lowered. A cliff may be detected on the basis of this principle.

In case that a front cliff is detected, the controller 700 may control the wheel motors MW so that the robot 1 travels while avoiding the detected cliff. In this case, the control of the wheel motor MW may be the stop control. Alternatively, the control of the wheel motor MW may be the control for switching the rotation direction.

The sensor part 600 may include a contact detection sensor 670.

The contact detection sensor 670 may detect whether the wheel 310 comes into contact with the ground surface.

The contact detection sensor 670 may include a TOF sensor configured to measure a spacing distance between the wheel 310 of the robot 1 and the ground surface. The TOF sensor may be a three-dimensional camera to which a time-of-flight (TOF) technology is applied. As well known, the TOF technology refers to a technology for measuring a distance from an object on the basis of the round-trip flight time for which the light is emitted toward the object and reflected back.

The TOF sensor may be disposed in the wheel part 300. For example, the contact detection sensor 670 may be disposed on each of the left and right third links 230. It is possible to determine whether the wheel 310 is in a state of being in contact with the ground surface on the basis of the distance from the ground surface measured by the TOF sensor. In case that the distance measured by the TOF sensor is less than a preset distance (or less than a lower limit value of a preset distance range), the wheel 310 is in a state of being in contact with the ground surface. In case that the distance measured by the TOF sensor is a preset distance or more (or an upper limit value or more of the preset distance range), the wheel 310 is in a state of being spaced apart from the ground surface.

The contact detection sensor 670 may include a load cell configured to measure a magnitude of a force applied to some components of the robot 1.

As well known, when a force is applied to the load cell, a resistance value of a strain gauge provided on a surface of the load cell changes. In this case, it is possible to measure a magnitude of the force applied to the load cell on the basis of the change in resistance value.

The load cell may be disposed on the leg part 200. Particularly, the load cell may be disposed on each of the left and right third links 230. The third link 230 is transformed as a vertical drag force is applied to the third link 230 from the ground surface in the state in which the wheel 310 is in contact with the floor. The measurement value of the load cell is a value different from an initial value as the third link 230 is transformed. Therefore, it is possible to determine whether the wheel 310 is in a state of being in contact with the ground surface.

The sensor part 600 may include an environmental sensor 680.

The environmental sensor 680 may be configured to measure various environmental states of the outside of the robot 1, i.e., various environmental states in the house in which the robot 1 travels. The environmental sensor 680 may include at least one of a temperature sensor, a humidity sensor, and a dust sensor.

The environmental sensor 680 may be disposed on the robot main body 100. More specifically, the environmental sensor 680 may be disposed at the rear side of the robot main body 100. In a possible embodiment, the information measured by the environmental sensor 680 may be visually displayed on the display 120.

The sensor part 600 may include a lateral sensor 690.

The lateral sensor 690 may measure a distance from an obstacle including a wall surface or the like.

The lateral sensor 690 may be configured to detect a distance from a wall surface of a lateral surface on which the robot 1 travels. The lateral sensor 690 may be variously configured within a range in which the lateral sensor 690 may detect a relative distance between an obstacle and a point at which the lateral sensor 690 is disposed.

For example, the lateral sensor 690 may include a light-emitting part configured to emit light, and a light-receiving part configured to receive reflected light. The lateral sensor 690 may be configured as an infrared sensor.

The lateral sensors 690 may be disposed on two opposite surfaces of the robot 1. For example, the lateral sensor 690 may be disposed on an outer surface of the third link 230 of the leg part 200.

The interface part may include at least one component for implementing an interaction between the user and the robot 1, and the component may be configured to input an instruction from the user and/or output information to the user.

The interface part may include a microphone 140.

The microphone 140 may be configured to recognize the user's voice and provided as a plurality of microphones 140. The plurality of microphones 140 may be disposed in the main body housing 110. For example, four microphones 140 may be disposed at the upper side of the main body housing 110.

A voice signal received by the microphone 140 may be used to track the user's position. In this case, a publicly-known sound source tracking algorithm may be applied. For example, the sound source tracking algorithm may be a three-point measurement method (triangular measurement method) using a difference between times at which the plurality of microphones 140 receive the voice signals. The principle is that the position of the voice source is calculated by using the position of the microphone 140 and the speed of the sound waves.

Meanwhile, when the microphone 140 and the above-mentioned mapping camera 610 cooperate with each other, the cooperation may be implemented so that the robot 1 finds the user's position even in case that the user calls the robot 1 from a remote location.

The interface part may include the speaker 450.

The speaker 450 may be disposed on the arm 400. For example, the speaker 450 may be disposed on the rotary coupling part 410 of the arm 400. The speakers 450 may be respectively disposed at positions at which the two opposite sides of the main body housing 110 based on the leftward/rightward direction are covered.

The speaker 450 may transmit information on the robot 1 as a sound. A source of the sound transmitted by the speaker 450 may be sound data pre-stored in the robot 1. For example, the pre-stored sound data may be voice data of the robot 1. For example, the pre-stored sound data may be a notification sound that informs a state of the robot 1. Meanwhile, a source of the sound transmitted by the speaker 450 may be sound data received through the communication part 710.

The interface part may include the display 120 and the input part 125.

The display 120 may include displays disposed on one or more modules. The display 120 may be disposed at a front upper side of the robot main body 100.

The display 120 may include any one of a light-emitting diode (LED), a liquid crystal display (LCD), a plasma display panel, and an organic light-emitting diode (OLED).

The display 120 may display information such as information on an operating time of the robot 1 and information on electric power of the battery B.

The display 120 may display a facial expression of the robot 1. Alternatively, the display 120 may display pupils of the robot 1. A current state of the robot 1 may be expressed as an anthropomorphic emotion through a facial shape or a pupil shape displayed on the display 120. For example, when the user goes out and returns, a smiling face or smiling eyes may be displayed on the display 120. Therefore, the user has an effect of feeling in communion with the robot 1.

The input part 125 may be configured to receive a control instruction for controlling the robot 1 from the user. For example, the control instruction may be an instruction for changing various settings of the robot 1. For example, the settings may be voice volume, display brightness, and power saving mode settings.

The input part 125 may be disposed on the display 120.

The input part 125 generates key input data inputted by the user to control the operation of the robot 1. To this end, the input part 125 may include a keypad, a dome switch, a touchpad (resistive touchpad/capacitive touchpad), and the like. **In** particular, in case that the touchpad defines a mutual layer structure together with a first display, the touchpad may be called a touch screen.

The communication part 710 may be provided to transmit signals between the components in the robot 1. For example, the communication part 710 may support controller area network (CAN) communication. For example, the signal may be a control instruction to be transmitted from the controller 700 to other components.

The communication part 710 may support wireless communication with other devices existing outside the robot 1. As a wireless communication module for wireless communication support, a near-field communication module or a far-field communication module may be provided.

For example, a short-range communication may be Bluetooth communication, near field communication (NFC) communication, or the like.

For example, the far-field communication may be wireless LAN (WLAN), digital living network alliance (DLNA), wireless broadband (Wibro), world interoperability for microwave access (Wimax), global system for mobile communication (GSM), code division multi-access (CDMA), code division multi-access 2000 (CDMA 2000), enhanced voice-data optimized or enhanced voice-data only (EV-DO), wideband CDMA (WCDMA), high-speed downlink packet access (HSDPA), high-speed uplink packet access (HSUPA), IEEE 802.16, long term evolution (LTE), long term evolution-advanced (LTEA), wireless mobile broadband service (WMBS), Bluetooth low energy (BLE), Zigbee, radio frequency (RF), long range LoRa, and the like.

The memory 720 is configured to store various data for operating or driving the robot 1.

The memory 720 may store application programs and various relevant data for allowing the robot 1 to autonomously travel. The memory 720 may also store data sensed by the sensor part 600 and store setting information on various settings selected or inputted by the user.

The memory 720 may include magnetic storage media or flash storage media. However, the scope of the present disclosure is not limited thereto. The memory 720 may include an internal memory and/or an external memory. The memory 720 may include a volatile memory such as a DRAM, an SRAM, or an SDRAM, a non-volatile memory such as a one-time programmable ROM (OTPROM), a PROM, an EPROM, an EEPROM, a mask ROM, a flash ROM, a NAND flash memory, or a NOR flash memory, a flash drive such as an SSD, a compact flash (CF) card, an SD card, a Micro-SD card, a Mini-SD card, an Xd card, or a memory stick, or a storage device such as an HDD.

The memory 720 may be included in the controller 700 or provided as a separate component.

The battery B is configured to supply electric power to other components constituting the robot 1.

The battery B may be disposed in the robot main body 100. More specifically, the battery B may be accommodated in the main body housing 110. Although not illustrated, the battery B may be disposed rearward of the suspension motor MS.

The battery B may be charged with external electric power. To this end, the charging terminal 130 for charging the battery B may be provided at one side of the robot main body 100. In the present disclosure embodiment, the charging terminal 130 may be disposed at the lower side of the robot main body 100. Therefore, the robot 1 may approach the charging stand and move downward, such that the robot 1 may be easily coupled to the charging stand in such a way that the charging terminal 130 is seated on the corresponding terminal of the charging stand from above.

While the present disclosure has been described with reference to the specific embodiments, the specific embodiments are only for specifically explaining the present disclosure, and the present disclosure is not limited to the specific embodiments. It is apparent that the present disclosure may be modified or altered by those skilled in the art without departing from the technical spirit of the present disclosure.

All the simple modifications or alterations to the present disclosure fall within the scope of the present disclosure, and the specific protection scope of the present disclosure will be defined by the appended claims.

## Claims

1. A robot comprising:
a robot main body configured to accommodate therein a motor and a battery;
a leg part configured to support the robot main body;
a wheel part rotatably coupled to the leg part and configured to roll on a ground surface;
an arm rotatably coupled to two opposite surfaces of the robot main body; and
a coupling part disposed on the arm and configured to couple the arm to a functional module configured to move together with the robot main body, the arm being configured to be separably coupled to the functional module.

2. The robot of claim 1, wherein the coupling part comprises an attaching/detaching member detachably coupled to the functional module by magnetism.

3. The robot of claim 1, wherein the coupling part comprises a catching member caught by and coupled to the functional module at a position corresponding to the functional module.

4. The robot of claim 3, wherein the functional module comprises:
a module main body disposed at a position corresponding to the robot main body;
a hook rotatably coupled to the module main body and configured to be inserted into and caught by a catching groove formed in the catching member; and
an elastic part configured to provide an elastic force to a rotation of the hook to maintain a state in which the hook is caught by the catching groove.

5. The robot of claim 4, wherein the coupling part comprises an attaching/detaching member detachably coupled to the functional module by magnetism, and
wherein the attaching/detaching member is coupled to the functional module by an attractive magnetic force, such that the hook is inserted into and caught by the catching groove by being pressed and rotated by the catching member.

6. The robot of claim 1, wherein the coupling part comprises a connection terminal electrically connected to the functional module.

7. The robot of claim 1, wherein the coupling part is disposed outside a rotation radius of the arm.

8. A robot comprising:
a robot main body configured to accommodate therein a motor and a battery;
a leg part configured to support the robot main body;
a wheel part rotatably coupled to the leg part and configured to roll on a ground surface;
an arm comprising a pair of rotary coupling parts rotatably coupled to two opposite surfaces of the robot main body, a connection part configured to connect the pair of rotary coupling parts, a rotary body disposed to be rotatable about the connection part as a rotation axis, and a rotation motor configured to provide a rotational force to the rotary body; and
a coupling part integrally rotatably coupled to the rotary body and configured to couple the rotary body to a functional module configured to move together with the robot main body, the rotary body being configured to be separably coupled to the functional module.

9. The robot of claim 8, wherein the coupling part comprises an attaching/detaching member detachably coupled to the functional module by magnetism.

10. The robot of claim 8, wherein the coupling part comprises a catching member caught by and coupled to the functional module at a position corresponding to the functional module.

11. The robot of claim 10, wherein the functional module comprises:
a module main body disposed at a position corresponding to the robot main body;
a hook rotatably coupled to the module main body and configured to be inserted into and caught by a catching groove formed in the catching member; and
an elastic part configured to provide an elastic force to a rotation of the hook to maintain a state in which the hook is caught by the catching groove, and
wherein the hook is separated from the catching groove during a process in which the rotary body rotates.

12. The robot of claim 8, wherein the coupling part comprises a connection terminal electrically connected to the functional module.
